(19) Europäisches Patentamt
European Patent Office
Office européen des brevets

(11) **EP 3 686 303 B1**

(12) **EUROPEAN PATENT SPECIFICATION**

(45) Date of publication and mention
of the grant of the patent:
**29.12.2021  Bulletin 2021/52**

(51) Int Cl.:
*C22C 38/00* (2006.01)   *C21D 8/02* (2006.01)
*C21D 8/10* (2006.01)   *C21D 9/08* (2006.01)
*C22C 38/02* (2006.01)   *C22C 38/04* (2006.01)
*C22C 38/06* (2006.01)   *C22C 38/08* (2006.01)
*C22C 38/12* (2006.01)   *C22C 38/14* (2006.01)
*C22C 38/16* (2006.01)   *C22C 38/18* (2006.01)
*C22C 38/22* (2006.01)   *C22C 38/24* (2006.01)
*C22C 38/26* (2006.01)   *C22C 38/28* (2006.01)
*C22C 38/40* (2006.01)   *C21D 1/19* (2006.01)

(21) Application number: **17925948.6**

(22) Date of filing: **19.09.2017**

(86) International application number:
**PCT/JP2017/033722**

(87) International publication number:
**WO 2019/058424 (28.03.2019 Gazette 2019/13)**

(54) **STEEL PIPE AND STEEL PLATE**

STAHLROHR UND STAHLPLATTE

TUYAU D' ACIER ET PLAQUE  D'ACIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.07.2020   Bulletin 2020/31**

(73) Proprietor: **Nippon Steel Corporation
Tokyo 1008071 (JP)**

(72) Inventors:
• **HARA Takuya
Tokyo 100-8071 (JP)**
• **SHINOHARA Yasuhiro
Tokyo 100-8071 (JP)**

• **FUJISHIRO Taishi
Tokyo 100-8071 (JP)**

(74) Representative: **Vossius & Partner
Patentanwälte Rechtsanwälte mbB
Siebertstrasse 3
81675 München (DE)**

(56) References cited:
WO-A1-2013/100106   WO-A1-2015/030210
WO-A2-2012/043984   CN-A- 104 419 871
JP-A- 2015 183 273   JP-B2- 5 499 733
US-A1- 2015 059 912   US-A1- 2015 090 370

**Description**

[Technical Field of the Invention]

The present invention relates to a steel pipe and a steel plate forming the steel pipe.

[Related Art]

In recent years, with an increase in global energy demand, exploration and mining of seabed resources such as oil and natural gas have been actively carried out, but this energy exploration and mining site have moved to very cold regions or cold and deep waters (for example, the Arctic Circle). Accordingly, as a steel pipe for a pipeline laid in a very cold region, a high strength welded steel pipe having excellent toughness in a very low temperature environment, particularly in a very low temperature environment at -60°C or lower, is demanded.

Specifically, an improvement in a very low temperature toughness and an increase in thickness are required for steel pipes for a line pipe of American Petroleum Institute (API) standard X60 (415 MPa or more) or higher. In addition, since line pipes are welded together in the very low temperature environment, excellent field weldability is also required to facilitate construction on a site.

Hitherto, several steel plates for a line pipe and welded steel pipes for a line pipe, which meet this requirement, have been proposed (see, for example, Patent Documents 1 to 4).

Patent Document 4 describes a high strength thick welded steel pipe for a line pipe excellent in low temperature roughness, which is a steel pipe obtained by performing seam welding on a base steel plate formed in a tubular shape, in which the base steel plate has a chemical composition including, by mass%, C: 0.010% to 0.050%, Si: 0.01% to 0.50%, Mn: 0.50% to 2.00%, S: 0.0001% to 0.0050%, Ti: 0.003% to 0.030%, Mo: 0.10% to 1.50%, B: 0.0003% to 0.0030%, O: 0.0001% to 0.0080%, P: limited to 0.050% or less, Al: limited 0.020% or less, and a remainder consisting of iron and unavoidable impurities, Ceq is 0.30 to 0.53, Pcm is 0.10 to 0.20, amounts of the elements satisfy $10C + 100Al + 5Mo + 5Ni < 3.3$, a microstructure of the base steel plate contains polygonal ferrite in an area ratio 20% or less and bainite in an area ratio of 80% or more, an effective grain size is 20 $\mu$m or less, and an effective grain size of a welded heat-affected zone is 150 $\mu$m or less.

However, the present situation is that a thick welded steel pipe for a line pipe in which a base material portion and a welded portion stably have excellent low temperature toughness at a very low temperature such as -60°C has not been obtained.

In a case where a steel pipe is manufactured by processing a steel plate in a UO process, generally, end portions of the steel plate are butted up against each other and are seal-welded by arc welding. Normally, submerged arc welding is performed a plurality of times from the inner surface and the outer surface to seam-weld the end portions of the steel plate. In this case, there are cases where in a welded heat-affected zone (hereinafter, sometimes referred to as "HAZ") where grains are coarsened by the heat input of previous welding, the grains are further coarsened due to the heat input of the subsequent welding. This lowers the HAZ toughness.

As a technique for increasing the HAZ toughness of a welded steel pipe for a line pipe, a method of refining a HAZ structure using intragranular transformation has been proposed. This method is effective in improving the HAZ toughness at down to -30°C, but there remains a problem in securing the HAZ toughness at a very low temperature of -30°C or lower.

Patent Document 5 describes a steel plate used mainly in a linepipe field. The plate has a chemical composition containing, by mass %, C: 0.03% or more and 0.08% or less, Si: 0.01% or more and 1.0% or less, Mn: 1.2% or more and 3.0% or less, P: 0.015% or less, S: 0.005% or less, Al: 0.08% or less, Nb: 0.005% or more and 0.07% or less, Ti: 0.005% or more and 0.025% or less, N: 0.010% or less, O: 0.005% or less and the balance being Fe and inevitable impurities, a metallographic structure including a bainite phase and island martensite, and a polygonal ferrite in surface portions within 5 mm from the upper and lower surfaces.

[Prior Art Document]

[Patent Document]

[Patent Document 1] Japanese Unexamined Patent Application, First Publication No. 2008-013800
[Patent Document 2] Japanese Unexamined Patent Application, First Publication No. 2008-156754
[Patent Document 3] Japanese Unexamined Patent Application, First Publication No. 2008-163455
[Patent Document 4] Japanese Unexamined Patent Application, First Publication No. 2008-163456

[Patent Document 5] US 2015/059912 A1

[Disclosure of the Invention]

[Problems to be Solved by the Invention]

An object of the present invention is to increase the tensile strength, yield strength, and low temperature toughness of a base material portion (particularly toughness in a very low temperature environment at -60°C or lower) and the low temperature toughness of a welded portion, and to provide a steel pipe that solves the problems and a steel plate forming the steel pipe.

[Means for Solving the Problem]

The present inventors intensively studied a method of solving the above problems. As a result, the following knowledge was obtained.
In a steel plate for a line pipe, the strength of the steel plate can be secured and excellent toughness can be secured in a very low temperature environment at -60°C or lower by (x) limiting Ceq and Pcm to required ranges, (y) controlling the microstructure in a plate thickness direction at three portions including (1) a surface layer which is a region from the surface to a depth of 1 mm, (2) a 1/4t portion (t: plate thickness), and (3) a 1/2t portion, and (z) setting the effective grain size of a through-thickness surface to 20 $\mu$m or less. This knowledge will be described later.
The present invention was made based on the above knowledge, is defined in the appended claims, and the gist is as follows.

(1) A steel pipe according to an aspect of the present invention includes: a base material portion made of a cylindrical steel plate; and a welded portion which is provided at a seam portion of the steel plate and extends in a longitudinal direction of the steel plate, in which a chemical composition of the steel plate contains, by unit mass%, C: 0.030% to 0.100%, Si: 0.01 % to 0.50%, Mn: 0.50% to 2.50%, P: 0.050% or less, S: 0.005% or less, Al: 0.040% or less, Ti: 0.003% to 0.030%, O: 0.005% or less, Nb: 0.0001% to 0.20%, N: 0% to 0.008%, Cu: 0% to 1.00%, Ni: 0% to 1.00%, Mo: 0% to 1.00%, Cr: 0% to 1.00%, V: 0% to 0.10%, B: 0% to 0.005%, Zr: 0% to 0.050%, Ta: 0% to 0.050%, Mg: 0% to 0.010%, Ca: 0% to 0.005%, REM: 0% to 0.005%, Y: 0% to 0.005%, Hf: 0% to 0.005%, Re: 0% to 0.005%, W: 0% to 0.005%, and a remainder containing Fe and impurities, Ceq defined by Formula 1 is 0.30 to 0.53 and Pcm defined by Formula 2 is 0.100 to 0.165, a microstructure of a surface layer which is a region from a surface of the steel plate to a depth of 1 mm contains polygonal ferrite in an area ratio of 0% to 50%, and a remainder containing one or more of bainite, acicular ferrite, and tempered martensite, a microstructure of a 1/4t portion of the steel plate contains the polygonal ferrite in an area ratio of 10% to 40%, and a remainder containing one or both of the bainite and the acicular ferrite, a microstructure of a 1/2t portion of the steel plate contains the polygonal ferrite in an area ratio of 5% to 30%, and a remainder containing one or both of the bainite and the acicular ferrite, an effective grain size of a through-thickness surface of the steel plate is 20 $\mu$m or less, and in the through-thickness surface of the steel plate, a hardness distribution in a plate thickness direction satisfies Formula 3, and a difference between a hardness of the surface layer and a hardness of the 1/2t portion is 30 Hv or less,

$$Ceq = [C] + [Mn] / 6 + ([Ni] + [Cu]) / 15 + ([Cr] + [Mo] + [V]) / 5 \ldots \text{Formula 1}$$

$$Pcm = [C] + [Si] / 30 + ([Mn] + [Cu] + [Cr]) / 20 + [Ni] / 60 + [Mo] / 15 + [V] / 10 + 5 \times [B] \ldots \text{Formula 2}$$

The hardness of the surface layer $\geq$ the hardness of the 1/4t portion $\geq$ the hardness of the 1/2t portion...Formula 3
where, in Formula 1 and Formula 2, an element symbol enclosed in parentheses indicates an amount of a corresponding element in the chemical composition of the steel plate by unit mass%, the term "t" is a plate thickness of the steel pipe, the 1/4t portion is a region having a thickness of 2 mm with a position at a depth of 1/4 of the plate thickness t of the steel plate from the surface of the steel plate as a central plane, the 1/2t portion is a region having a thickness of 2 mm with a position at a depth of 1/2 of the plate thickness t of the steel plate from the surface of the steel plate as a central plane, the microstructure of the surface layer, the microstructure of the 1/4t portion, and the microstructure of the 1/2t portion are identified by the method described in the description, the effective grain size is identified by the method described in the description, the hardness distribution is identified by the method described in the description, and the through-thickness surface is a cut section parallel to the longitudinal direction of the steel pipe and perpendicular to the surface of the steel plate.

(2) In the steel pipe according to (1), the chemical composition of the steel plate may contain, by unit mass%, N: 0.001% to 0.008%.

(3) In the steel pipe according to (1) or (2), the chemical composition of the steel plate may contain one or more selected from the group consisting of, by unit mass%, Cu: 0.05% to 1.00%, Ni: 0.05% to 1.00%, Mo: 0.01% to 1.00%, Cr: 0.01% to 1.00%, V: 0.01% to 0.10%, B: 0.0001% to 0.005%, Zr: 0.0001% to 0.050%, Ta: 0.0001% to 0.050%, Mg: 0.0001% to 0.010%, Ca: 0.0001% to 0.005%, REM: 0.0001% to 0.005%, Y: 0.0001% to 0.005%, Hf: 0.0001% to 0.005%, Re: 0.0001% to 0.005%, and W: 0.0001% to 0.005%.

(4) In the steel pipe according to any one of (1) to (3), the chemical composition of the steel plate may contain, by unit mass%, Al: 0.005% or less.

(5) In the steel pipe according to any one of (1) to (4), the microstructure of the surface layer of the steel plate may contain the tempered martensite in an area ratio of 1 % or more.

(6) In the steel pipe according to any one of (1) to (5), the Pcm may be 0.100 to 0.140.

(7) In the steel pipe according to any one of (1) to (6), the steel plate may have a plate thickness of 25.4 mm or more, and the Ceq may be 0.35 to 0.53.

(8) A steel plate according to another aspect of the present invention is the steel plate of the steel pipe according to any one of (1) to (7).

[Effects of the Invention]

According to the present invention, it is possible to obtain a steel pipe capable of increasing the low temperature toughness of a base material portion and a welded portion, particularly toughness in a very low temperature environment at -60°C or lower while securing the tensile strength and yield strength of the base material portion, and a steel plate forming the steel pipe. Therefore, according to the present invention, it is possible to provide a high strength steel plate and a high strength steel pipe for a pipeline laid in, for example, the very low temperature environment.

[Brief Description of the Drawings]

FIG. 1 is a diagram schematically showing an example of controlled cooling.
FIG. 2 is a diagram showing an example of a preferable hardness distribution at a very low temperature in a plate thickness direction of a steel plate.
FIG. 3 is a view showing the microstructure of a surface layer which is a region from the surface to a depth of 1 mm.
FIG. 4 is a view showing the microstructure of a 1/4t portion.
FIG. 5 is a view showing the microstructure of a 1/2t portion.
FIG. 6 is a view showing an example of a steel pipe according to an embodiment.

[Embodiments of the Invention]

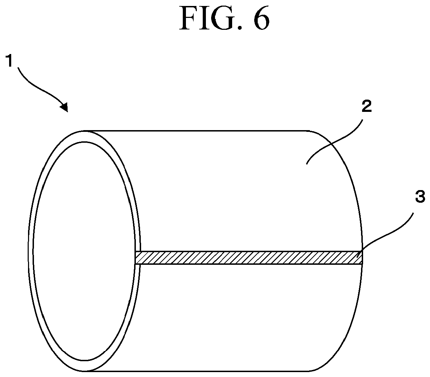

As shown in FIG. 6, a steel pipe 1 according to the present embodiment includes a steel plate 2 forming the base material portion of the steel pipe 1 and a welded portion 3 which is provided at a seam portion of the steel plate and extends in a longitudinal direction of the steel pipe. The base material portion has, for example, a cylindrical shape. The steel pipe 1 according to the present embodiment is obtained by forming the steel plate 2 in a cylindrical shape, then butting up both end portions of the steel plate 2 against each other, and welding both the end portions.

Hereinafter, the steel pipe according to the present embodiment will be described sequentially. Since the main features of the steel pipe according to the present embodiment are included in the steel plate forming the base material portion, the steel plate of the steel pipe according to the present embodiment will be mainly described in the following description.

(i) Chemical Composition of Steel Plate

Initially, the reason for limiting the chemical composition of the steel plate of the steel pipe according to the present embodiment is described. The numerical values of alloying elements described below all relate to the chemical composition of the steel plate of the steel pipe. The unit "%" relating to the chemical composition means "mass%".

C: 0.030% to 0.100%

C is an element essential for improving the strength of the steel plate. When the C content is less than 0.030%, an effect of improving the strength cannot be sufficiently obtained. Therefore, the C content is set to 0.030% or more. The C content is preferably 0.040% or more, and more preferably 0.050% or more.

On the other hand, when the C content exceeds 0.100%, weldability (an ability of the steel plate to form a welded portion having strength and toughness that can withstand low temperature environments), particularly toughness of a welded portion is decreased. Therefore, the C content is set to 0.100% or less. The C content is preferably 0.085% or less, and more preferably 0.075% or less or 0.070% or less.

Si: 0.01% to 0.50%

Si is an element that has a deoxidizing effect and contributes to an improvement in the strength of the steel plate by solid solution strengthening. When the Si content is less than 0.01%, the above effects cannot be sufficiently obtained. Therefore, the Si content is set to 0.01% or more. The Si content is preferably 0.05% or more, and more preferably 0.10% or more.

On the other hand, when the Si content exceeds 0.50%, the weldability, particularly the toughness of the welded portion is decreased. Therefore, the Si content is set to 0.50% or less. The Si content is preferably 0.40% or less, and more preferably 0.35% or less.

Mn: 0.50% to 2.50%

Mn is an element that contributes to the improvement in strength and toughness. When the Mn content is less than 0.50%, the above effects cannot be sufficiently obtained. Therefore, the Mn content is set to 0.50% or more. The Mn content is preferably 0.80% or more, and more preferably 1.00% or more.

On the other hand, when the Mn content exceeds 2.50%, the toughness of the welded portion is decreased. Therefore, the Mn content is set to 2.50% or less. The Mn content is preferably 2.35% or less, and more preferably 2.20% or less.

P: 0.050% or Less

P is an element that remains in the steel plate as an impurity and segregates at grain boundaries to impair the toughness. When the P content exceeds 0.050%, the toughness of the steel plate is significantly decreased and the toughness of the welded portion is also decreased. Therefore, the P content is set to 0.050% or less. The P content is preferably 0.030% or less, and more preferably 0.025% or less.

Since P is not necessary for the steel pipe according to the embodiment, the lower limit of the P content is 0%. However, when the P content is reduced to less than 0.0001%, there are cases where the manufacturing cost of the steel pipe is significantly increased. Therefore, the lower limit of the P content may be set to 0.0001 %.

S: 0.005% or Less

S is an element that remains in the steel plate as an impurity and forms MnS during hot rolling the steel plate. MnS causes cracking and the toughness is impaired. When the S content exceeds 0.005%, the toughness of the steel plate is significantly decreased, and the toughness of the welded portion is decreased. Therefore, the S content is set to 0.005% or less. The S content is preferably 0.003% or less, and more preferably 0.001 % or less.

Since S is not necessary for the steel pipe according to the embodiment, the lower limit of the S content is 0%. However, when the S content is reduced to less than 0.0001%, there are cases where the manufacturing cost of the steel pipe is significantly increased. Therefore, the lower limit of the S content may be set to 0.0001%.

Al: 0.040% or Less

Al is a deoxidizing element. When the Al content exceeds 0.040%, an excessive amount of oxides is generated, the cleanliness of the steel plate is decreased, and the toughness is decreased. Therefore, the Al content is set to 0.040% or less. In addition, since the toughness of the welded portion and HAZ of the steel pipe is improved as the Al content is small, the Al content is preferably 0.035% or less, and more preferably 0.030% or less. In a case where it is desired to improve particularly the HAZ toughness, the Al content may be set to 0.005% or less.

Since the deoxidizing effect of Al is not essential for the steel pipe according to the present embodiment, the lower limit of the Al content is 0%. However, there are cases where about 0.001% of Al is incorporated into the steel plate from steel raw materials and/or in a steel making process. When the Al content is reduced to less than 0.001 %, the manufacturing cost of the steel pipe is significantly increased. Therefore, the lower limit of the Al content may be 0.001%.

Ti: 0.003% to 0.030%

Ti is an element that forms carbonitrides to refine grains and contributes to the improvement in toughness. When the Ti content is less than 0.003%, the above effects cannot be sufficiently obtained. Therefore, the Ti content is set to 0.003% or more. The Ti content is preferably 0.005% or more, and more preferably 0.008% or more.

On the other hand, when the Ti content exceeds 0.030%, carbonitrides are excessively generated and the toughness of the steel plate and the toughness of the welded portion are decreased. Therefore, the Ti content is set to 0.030% or less. The Ti content is preferably 0.027% or less, and more preferably 0.025% or less.

O: 0.005% or Less

Since O is not necessary for the steel pipe according to the present embodiment, the lower limit of the O content is 0%. However, O is an element that usually remains in the steel plate at about 0.0001% even after deoxidation. When O is reduced to less than 0.0001%, the manufacturing cost of the steel pipe is significantly increased. Therefore, the O content may be 0.0001% or more. The O content is preferably 0.0010% or more, and more preferably 0.0030% or more.

On the other hand, when the O content exceeds 0.005%, oxides are generated, the cleanliness of the steel plate is decreased, and the toughness is decreased. Therefore, O is set to 0.005% or less. The O content is preferably 0.004% or less, and more preferably 0.003% or less.

Nb: 0.0001 % to 0.20%

Nb is an element that forms carbides and nitrides and contributes to the improvement in strength. When Nb is less than 0.0001%, the above effects cannot be sufficiently obtained. Therefore, the Nb content is set to 0.0001% or more. The Nb content is preferably 0.0005% or more.

On the other hand, when the Nb content exceeds 0.20%, coarse carbonitrides are generated and very low temperature toughness is decreased. Therefore, the Nb content is set to 0.20% or less. The Nb content is preferably 0.10% or less.

The chemical composition of the steel plate of the steel pipe according to the present embodiment may include, in addition to the above elements, one or more optional elements selected from the group consisting of N, Cu, Ni, Mo, Cr, V, B, Zr, Ta, Mg, Ca, REM, Y, Hf, Re, and W in a range in which the properties are not impaired. However, since these optional elements are not essential for solving the problem of the steel pipe according to the present embodiment, the lower limit of each amount of these optional elements is 0%. All lower limits which are not 0% of the optional elements described below are preferable lower limits.

N: 0.001% to 0.008%

N is an element that forms nitrides and contributes to the refinement of austenite grain sizes during heating the steel plate. When the N content is set to 0.001% or more, the above effects can be sufficiently obtained, which is preferable. The N content is more preferably 0.003% or more.

On the other hand, when the N content exceeds 0.008%, excessively precipitated nitrides are accumulated and lower toughness of the steel plate and toughness of the welded portion. Therefore, the N content is set to 0.008% or less. The N content is preferably 0.006% or less.

Cu: 0.05% to 1.00%

Cu is an element that contributes to the improvement in strength. When the Cu content is set to 0.05% or more, the above effects can be sufficiently obtained, which is preferable. The Cu content is more preferably 0.07% or more. On the other hand, when the Cu content exceeds 1.00%, hot workability is decreased and the very low temperature toughness is decreased. Therefore, the Cu content is set to 1.00% or less. The Cu content is preferably 0.70% or less.

Ni: 0.05% to 1.00%

Ni is an element that contributes to the improvement in strength and toughness. When the Ni content is less than 0.05%, the above effects cannot be sufficiently obtained. Therefore, the Ni content is set to 0.05% or more. The Ni content is more preferably 0.08% or more. On the other hand, when the Ni content exceeds 1.00%, not only are the above effects saturated, but also the weldability of the steel plate is decreased. Therefore, the Ni content is set to 1.00% or less. The Ni content is preferably 0.50% or less.

Mo: 0.01% to 1.00%

Mo is an element that enhances hardenability and contributes to the improvement in strength. When the Mo content is set to 0.01% or more, the above effects can be sufficiently obtained, which is preferable. The Mo content is more preferably 0.05% or more. On the other hand, when the Mo content exceeds 1.00%, the strength is excessively increased and the toughness is decreased, and the weldability, particularly the very low temperature toughness is also decreased. Therefore, the Mo content is set to 1.00% or less. The Mo content is preferably 0.50% or less.

Cr: 0.01 to 1.00%

Cr is an element that enhances hardenability and contributes to improvement in strength. When the Cr content is set to 0.01% or more, the above effects can be sufficiently obtained, which is preferable. The Cr content is more preferably 0.05% or more. On the other hand, when the Cr content exceeds 1.00%, the hardenability is increased too much and the very low temperature toughness is decreased. Therefore, the Cr content is set to 1.00% or less. The Cr content is preferably 0.50% or less.

V: 0.01% to 0.10%

V is an element that forms carbides and nitrides and contributes to the improvement in strength. When the V content is set to 0.01% or more, the above effects can be sufficiently obtained, which is preferable. The V content is more preferably 0.03% or more. On the other hand, when the V content exceeds 0.10%, coarse carbonitrides are generated and the very low temperature toughness is deteriorated. Therefore, the V content is set to 0.10% or less. The V content is preferably 0.07% or less.

B: 0.0001 % to 0.005%

B is an element that is solid soluted in steel and increases the hardenability, and contributes to the improvement in strength. When the B content is set to 0.0001 % or more, the above effects can be sufficiently obtained, which is preferable. The B content is more preferably 0.0003% or more.
On the other hand, when the B content exceeds 0.005%, coarse BN precipitates and the very low temperature toughness of the welded portion is decreased. Therefore, the B content is set to 0.005% or less. The B content is preferably 0.004% or less, and more preferably 0.003% or less.

Zr: 0.0001% to 0.050%

Zr is an element that contributes to the improvement in toughness by controlling the shape of sulfides and oxides. When the Zr content is set to 0.0001% or more, the above effects can be sufficiently obtained, which is preferable. The Zr content is more preferably 0.0010% or more. On the other hand, when the Zr content exceeds 0.050%, coarse sulfides and oxides are generated and the workability is decreased. Therefore, the Zr content is set to 0.050% or less. The Zr content is preferably 0.030% or less.

Ta: 0.0001% to 0.050%

Ta is an element that forms carbides, nitrides, and the like and contributes to the improvement in strength. When the Ta content is set to 0.0001% or more, the above effects can be sufficiently obtained, which is preferable. The Ta content is more preferably 0.0010% or more. On the other hand, when the Ta content exceeds 0.050%, coarse carbonitrides are generated and the toughness is decreased. Therefore, the Ta content is set to 0.050% or less. The Ta content is preferably 0.035% or less.

Mg: 0.0001% to 0.010%

Mg is an element that contributes to the improvement in toughness by controlling the form of sulfide inclusions. When the Mg content is set to 0.0001% or more, the above effects can be sufficiently obtained, which is preferable. The Mg content is more preferably 0.0010% or more. On the other hand, when the Mg content exceeds 0.010%, oxides are generated, the cleanliness of the steel is decreased, and the toughness is decreased. Therefore, the Mg content is set to 0.010% or less. The Mg content is preferably 0.005% or less.

Ca: 0.0001% to 0.005%

Ca is an element that contributes to the improvement in toughness by controlling the form of sulfide inclusions. When the Ca content is set to 0.0001% or more, the above effects can be sufficiently obtained, which is preferable. The Ca content is more preferably 0.0010% or more. On the other hand, when the Ca content exceeds 0.005%, oxides are generated, the cleanliness of the steel is decreased, and the toughness is decreased. Therefore, the Ca content is set to 0.005% or less. The Ca content is preferably 0.004% or less.

REM: 0.0001% to 0.005%

In the present embodiment, the term "REM" refers to a total of 16 elements composed of Sc and lanthanoids, and the term "REM content" means the total amount of these 16 elements. REM is a generic term for a group of elements that contribute to the improvement in toughness by controlling the form of sulfide inclusions. When the REM content is set to 0.0001% or more, the above effects can be sufficiently obtained, which is preferable. The REM content is more preferably 0.0010% or more. On the other hand, when the REM content exceeds 0.005%, oxides are generated, the cleanliness of the steel is decreased, and the toughness is decreased. Therefore, the REM content is set to 0.005% or less. The REM content is preferably 0.002% or less.
Y: 0.0001% to 0.005%
Hf: 0.0001% to 0.005%
Re: 0.0001% to 0.005%
Y, Hf, and Re are elements that contribute to the improvement in hot workability. When the amount of any one or more of Y, Hf, and Re is set to 0.0001% or more, the above effect can be sufficiently obtained, which is preferable. More preferably, the amount of any one or more of Y, Hf, and Re is 0.0010% or more.

On the other hand, when the amount of Y, Hf, or Re exceeds 0.005%, the alloy cost is increased and manufacturability is decreased. Therefore, each amount of Y, Hf, and Re is set to 0.005% or less. Preferably, each amount of Y, Hf, and Re is 0.002% or less.

W: 0.0001% to 0.005%

W is an element that contributes to the improvement in strength by solid solution strengthening. When the W content is set to 0.0001% or more, the above effects can be sufficiently obtained, which is preferable. The W content is more preferably 0.0010% or more. On the other hand, when the W content exceeds 0.005%, the manufacturability is decreased due to precipitation or segregation. Therefore, the W content is set to 0.005% or less. The W content is preferably 0.002% or less.
In the chemical composition of the steel plate of the steel pipe according to the present embodiment, the remainder other than the above elements contains Fe and impurities. Impurities are elements that are incorporated from the steel raw materials and/or in the steel making process and remain in the steel plate at a range where the properties of the steel plate and the properties of the steel pipe are not impaired. For example, each of Sb, Sn, Co, and As may remain at 0.10% or less, each of Pb and Bi may remain at 0.005% or less, and H may remain at 0.0005% or less.

(ii) Ceq and Pcm of Steel Plate

As described above, the steel pipe according to the present embodiment is a welded steel pipe provided with the steel plate and the welded portion obtained by welding the steel plate. In order to obtain a steel pipe that can be used in a very low temperature environment, it is necessary that not only does the steel plate have a chemical composition, a microstructure, and mechanical properties (while the chemical composition of the steel plate is as described above, the microstructure and mechanical properties of the steel plate will be described later) responsible for toughness that can withstand a very low temperature environment, but also the welded portion has strength and toughness that can withstand the very low temperature environment. In order to improve the strength and toughness of the welded portion, the steel plate needs to have weldability such that the welded portion having strength and toughness that can withstand the very low temperature environment can be formed.
In the steel plate of the steel pipe according to the present embodiment, in order to secure the weldability at the time of pipe making and the weldability on a site where the steel pipes are welded together (field weldability), Ceq (carbon equivalent) and Pcm (weld cracking sensitivity) are limited to required ranges. This will be described below.

Ceq: 0.30 to 0.53

Ceq (carbon equivalent) is one of indexes indicating the weldability of the steel plate. As described above, in the welded portion (particularly, welded heat-affected zone) of the steel pipe according to the present embodiment, it is necessary to secure the strength and toughness that can withstand a very low temperature environment, as in the base steel plate of the steel pipe. In addition, it is necessary to secure the strength and toughness that can withstand the very low temperature environment even at an end welded portion of a pipe where steel pipes are welded on a site.
Therefore, in the steel plate of the steel pipe according to the present embodiment, in order to secure the weldability at the time of manufacturing the steel pipe and the weldability at the time of welding on a site (field weldability), Ceq defined in Formula (1) is set to 0.30 to 0.53.

$$Ceq = [C] + [Mn] / 6 + ([Ni] + [Cu]) / 15 + ([Cr] + [Mo] + [V]) / 5 \ldots Formula (1)$$

In Formula (1), the element symbol enclosed in parentheses indicates the amount of the corresponding element in the chemical composition of the steel plate by unit mass%.
When Ceq is less than 0.30, a required structure cannot be obtained in the welded portion, and it is difficult to secure a strength that can withstand a very low temperature environment. Therefore, Ceq is set to 0.30 or more. Ceq is preferably 0.35 or more.
On the other hand, when Ceq exceeds 0.53, the strength of the welded portion becomes too high, and it is difficult to secure the weldability, particularly low temperature toughness of the welded portion. Therefore, Ceq is set to 0.53 or less. Ceq is preferably 0.48 or less.

Pcm: 0.100 to 0.165

Furthermore, in order to secure field weldability, in the steel plate of the steel pipe according to the present embodiment, in addition to Ceq defined by Formula (1), Pcm defined by Formula (2) is set to 0.100 to 0.165.

$$Pcm = [C] + [Si] / 30 + ([Mn] + [Cu] + [Cr]) / 20 + [Ni] / 60 + [Mo] / 15 + [V] / 10 + 5 \times [B] \ldots Formula (2)$$

In Formula (2), the element symbol enclosed in parentheses indicates the amount of the corresponding element in the chemical composition of the steel plate by unit mass%.
Pcm is an index indicating the cracking sensitivity of the welded portion, and is calculated based on the amounts of the elements that affect the weldability. When the Pcm is less than 0.100, a required structure cannot be obtained in the welded portion where the steel pipes according to the present embodiment are welded together in a very low temperature environment, and it is difficult to secure the strength that can withstand the very low temperature environment. Therefore, Pcm is set to 0.100 or more. Pcm is preferably 0.120 or more.
On the other hand, when Pcm exceeds 0.165, cracks may be generated in the welded portion where the steel pipes according to the present embodiment are welded together in the very low temperature environment. Therefore, Pcm is set to 0.165 or less. Pcm is preferably 0.150 or less, 0.140 or less, or 0.135 or less.

(iii) Microstructure

Next, the microstructure of the steel plate of the steel pipe according to the present embodiment will be described. In a case where the steel pipe according to the present embodiment is used as a line pipe for transporting fluids such as crude oil and natural gas in a very low temperature environment, the entire steel pipe is exposed to the very low temperature environment. Therefore, the steel plate of the steel pipe according to the present embodiment needs to have stable mechanical properties that can withstand the very low temperature environment.
Therefore, in the base steel plate of the steel pipe according to the present embodiment, the microstructure responsible for the mechanical properties is important.

In the steel plate of the steel pipe according to the present embodiment, in order to secure the mechanical properties (particularly toughness) that can withstand a very low temperature environment, the basic idea is to strengthen the entire steel plate by (1) defining the microstructure of a surface layer, which is a region from the surface to a depth of 1 mm, and the effective grain size in a through-thickness surface, (2) further defining the microstructures of a thickness 1/4t portion (t: plate thickness) and a thickness 1/2t portion (t: plate thickness), and (3) further defining the hardness distribution in a plate thickness direction. In addition, the 1/4t portion means a position at a depth of 1/4 of the plate thickness t of the steel plate from the surface of the steel plate and the vicinity thereof (or a region having a thickness of 2 mm with a position at a depth of 1/4 of the plate thickness t of the steel plate from the surface of the steel plate as a central plane), and the 1/2t portion means a position (that is, the central plane of the steel plate) at a depth of 1/2 of the plate thickness t of the steel plate from the surface of the steel plate and the vicinity thereof (or a region having a thickness of 2 mm with a position at a depth of 1/2 of the plate thickness t of the steel plate from the surface of the steel plate as a central plane).

In the steel plate of the steel pipe according to the present embodiment, the microstructure of each of the three portions in the plate thickness direction (that is, the surface layer, the 1/4t portion, and the 1/2t portion) is defined. However, the plate thickness of the steel plate of the steel pipe according to the present embodiment is not limited to a specific plate thickness as long as the required microstructures can be formed at the three portions. However, as will be described later, by setting the plate thickness of the steel plate to 25.4 mm or more, the steel pipe according to the present embodiment can exhibit a significant superiority over the existing steel pipe.

Hereinafter, the microstructure of the steel plate of the steel pipe according to the present embodiment will be described. The microstructure (particularly the amount of polygonal ferrite, and the like) of each portion of the steel plate may be different between the surface layer, the 1/4t portion, and the 1/2t portion, and furthermore, there are cases where the amount of polygonal ferrite in each portion is different along the plate thickness direction. In this case, when the average value of the amount of polygonal ferrite in each portion of the steel plate is within a predetermined range, it is considered that the requirements regarding the amount of polygonal ferrite of the steel plate of the steel pipe according to the present embodiment are satisfied. A method of forming the microstructure will be described later.

The microstructure of the region (that is, the surface layer) from the surface to the depth of 1 mm of the steel plate of the steel pipe according to the present embodiment contains

(a) polygonal ferrite in an area ratio of 0% to 50%, and
(b) a remainder containing one or more of bainite, acicular ferrite, and tempered martensite.

The surface layer of the steel pipe that is directly exposed to a very low temperature environment needs to have high mechanical properties that can withstand the very low temperature environment. For example, even if a crack generated on the surface of a steel pipe is very small, the crack becomes the origin of fracture in the very low temperature environment. Therefore, a steel pipe that is exposed to the very low temperature environment needs to have a surface layer where a crack is less likely to be generated and/or a surface layer where even if a crack is generated, the crack is less likely to propagate.

Therefore, in the steel plate of the steel pipe according to the present embodiment, the microstructure of the surface layer that is the region from the surface to the depth of 1 mm (hereinafter, sometimes simply referred to as "surface layer") is set to a microstructure containing (1) polygonal ferrite in an area ratio of 0% to 50%, and (b) a remainder containing one or more of bainite, acicular ferrite, and tempered martensite.

When the depth of the region having high mechanical properties in which the microstructure is within the above range is less than 1 mm, the thickness of the region having high mechanical properties is too thin, and it is difficult to maintain the mechanical properties that can withstand the very low temperature environment for a long period of time. Therefore, the region to which high mechanical properties has to be imparted is determined to be a region from the surface to the depth of 1 mm. That is, in the steel plate of the steel pipe according to the present embodiment, a microstructure capable of maintaining mechanical properties that can withstand a very low temperature environment over a long period of time is formed on the surface layer.

When the area ratio of soft polygonal ferrite exceeds 50% in the microstructure of the surface layer of the steel plate, it is difficult to secure the required strength and hardness using the residual structure in the surface layer of the steel plate. Therefore, the area ratio of polygonal ferrite in the microstructure of the surface layer of the steel plate is set to 50% or less. The area ratio of polygonal ferrite in the microstructure of the surface layer of the steel plate is preferably 45% or less, 42% or less, or 40% or less. On the other hand, even if the area ratio of polygonal ferrite in the microstructure of the surface layer of the steel plate is 0%, the required properties can be secured by the residual structure. Therefore, the lower limit of the area ratio of polygonal ferrite in the microstructure of the surface layer of the steel plate is 0%. However, the area ratio of polygonal ferrite in the microstructure of the surface layer of the steel plate may be defined as 2% or more, 5% or more, or 8% or more.

In the steel plate of the steel pipe according to the present embodiment, polygonal ferrite is an optical microscope structure, and is observed as a white lump-like structure that does not contain coarse precipitates such as coarse cementite and MA in the grains. In the steel plate of the steel pipe according to the present embodiment, bainite is a structure in which prior austenite grain boundaries are clear, a fine lath structure is developed in the grains, and fine carbides and the hybrid of austenite and martensite are scattered in and between the laths, or a structure in which prior austenite grain boundaries are clear, and in the grains, a white lump-like structure and carbides and the hybrid of austenite and martensite present in the periphery thereof are scattered. In the steel plate of the steel pipe according to the present embodiment, acicular ferrite is a structure in which prior austenite grain boundaries are not clear, acicular ferrite is generated in a random crystal orientation in the grains, and carbides and the hybrid of austenite and martensite are not included. In the steel plate of the steel pipe according to the present embodiment, tempered martensite is martensite that has undergone tempering that can be identified by an ordinary method.

In the surface layer of the steel plate, in order to secure required mechanical properties, the remainder of the microstructure contains one or more of bainite, acicular ferrite, and tempered martensite. Preferably, the remainder of the microstructure of the surface layer of the steel plate consists of only one or more of bainite, acicular ferrite, and tempered martensite. However, there are cases where other structures and inclusions are included in spots (for example, deformed ferrite). In this case, when the total area ratio of polygonal ferrite in the surface layer of the steel plate and one or more of bainite, acicular ferrite, and tempered martensite is 99% or more, other structures and inclusions are allowed.

It is not necessary to define the amount of each of bainite, acicular ferrite, and tempered martensite in the surface layer of the steel plate. However, for example, when the microstructure of the surface layer of the steel plate contains tempered martensite in an area ratio of 1% or more, 2% or more, or 3% or more, the strength of the surface layer of the steel plate is improved. Therefore, an improvement in the service life of the steel pipe can be expected. A method of forming the microstructure of the surface layer of the steel plate will be described later.

The microstructure of the 1/4t portion of the steel plate of the steel pipe according to the present embodiment contains

(a) polygonal ferrite in an area ratio of 10% to 40%, and
(b) a remainder containing one or both of bainite and acicular ferrite.

In order to form a microstructure responsible for mechanical properties that can withstand a very low temperature environment, in particular, very low temperature toughness, the microstructures of the 1/4t portion and the 1/2t portion are important. This is because the portion that most contributes to the toughness of the steel plate is a so-called central region of the steel plate from the 1/4t portion to the 1/2t portion.

In order to form the microstructure responsible for mechanical properties that can withstand a very low temperature environment, in particular, very low temperature toughness between the surface layer and the 1/4t portion of the steel plate, a microstructure containing (a) polygonal ferrite in an area ratio of 10% to 40% and (b) the remainder containing one or both of bainite and acicular ferrite is formed in the 1/4t portion. In the 1/4t portion, it is necessary to generate soft polygonal ferrite in an area ratio of 10% or more and thus improve the toughness of the 1/4t portion. The area ratio of polygonal ferrite in the 1/4t portion is preferably 15% or more, 18% or more, 20% or more, or 25% or more.

On the other hand, in the microstructure of the 1/4t portion, when the area ratio of soft polygonal ferrite exceeds 40%, the strength and hardness of the 1/4t portion in the plate thickness direction are greatly reduced, continuity between the microstructure of the surface layer of the steel plate and the microstructure of the 1/2t portion, which will be described later, is impaired, and it is difficult to secure the uniformity of the mechanical properties. Therefore, the area ratio of polygonal ferrite in the thickness 1/4t portion is set to 40% or less. The area ratio of polygonal ferrite in the thickness 1/4t portion may be set to 35% or less, or 30% or less.

By setting the area ratio of polygonal ferrite in the microstructure of the thickness 1/4t portion to 10% to 40% and setting the effective grain size of the through-thickness surface to 20 $\mu$m or less as described later, a steel pipe having a Charpy absorbed energy at -60°C of 200 J or more and a DWTT ductile fracture surface ratio of 85% or more can be secured.

The remainder of the microstructure of the 1/4t portion contains one or both of bainite and acicular ferrite. With this microstructure, the required mechanical properties can be secured. Preferably, the remainder of the microstructure of the 1/4t portion consists of only one or both of bainite and acicular ferrite. However, there are cases where other structures and inclusions are included in spots. In this case, when the total area ratio of polygonal ferrite in the 1/4t portion and one or both of bainite and acicular ferrite is 99% or more, other structures and inclusions are allowed.

A method of forming the microstructure of the thickness 1/4t portion will be described later together with the method of forming the microstructure of the surface layer of the steel plate.

The microstructure of the 1/2t portion contains

(a) polygonal ferrite in an area ratio of 5% to 30%, and

(b) a remainder containing one or both of bainite and acicular ferrite.

In order to form a microstructure responsible for mechanical properties that can withstand a very low temperature environment, in particular, strength and hardness and increase the toughness of the steel plate, a microstructure containing (a) polygonal ferrite in an area ratio of 5% to 30% and (b) the remainder containing one or both of bainite and acicular ferrite is formed in the 1/2t portion.

When the area ratio of soft polygonal ferrite is less than 5% in the microstructure of the 1/2t portion, the strength and hardness of the 1/2t portion are excessive, and the continuity with the microstructure of the 1/4t portion is impaired. As a result, it is difficult to cause variation in mechanical properties (strength and hardness) to be within a predetermined range. Therefore, the area ratio of polygonal ferrite in the microstructure of the 1/2t portion is set to 5% or more. The area ratio of polygonal ferrite in the microstructure of the 1/2t portion is preferably 10% or more, or 15% or more. Although it is not necessary to specifically define the upper limit of the area ratio of polygonal ferrite in the microstructure of the 1/2t portion, it is presumed that 30% is a practical upper limit in consideration of the capability of a manufacturing apparatus. The area ratio of polygonal ferrite in the microstructure of the 1/2t portion may be 28% or less, or 25% or less.

The remainder of the microstructure of the 1/2t portion is one or both of bainite and acicular ferrite. With this microstructure, the required mechanical properties can be secured. Preferably, the remainder of the microstructure of 1/2t portion consists of only one or both of bainite and acicular ferrite. However, there are cases where other structures and inclusions are included in spots. In this case, when the total area ratio of polygonal ferrite in the 1/2t portion and one or both of bainite and acicular ferrite is 99% or more, other structures and inclusions are allowed.

A method of forming the microstructure of the thickness 1/2t portion will be described later together with the method of forming the microstructure of the thickness 1/4t portion and the method of forming the microstructure of the surface layer of the steel plate.

As described above, in the steel pipe according to the present embodiment, the surface layer of the steel plate and the effective grain size, and furthermore, the microstructures of the 1/4t portion and the 1/2t portion are combined such that excellent mechanical properties can be secured in a very low temperature environment.

Identification of the structures of the surface layer, the 1/4t portion, the 1/2t portion can be performed by, for example, polishing a cross section of a sample including each portion to form an observed section with a metallic gloss, immersing the observed section in a nital solution (that is, a solution of 3% nitric acid and 97% ethanol) to be etched, and observing the structure of the observed section with an optical microscope. The area ratio of polygonal ferrite is obtained by image analysis of the optical micrograph of the microstructure. An optical micrograph of the microstructure is taken at a plurality of points in the surface layer, the 1/4t portion, or the 1/2t portion, and the average value of the area ratio of polygonal ferrite in each photograph is calculated. This average value may be regarded as the area ratio of polygonal ferrite in the surface layer, the 1/4t portion, or 1/2t portion.

(iv) Effective Grain Size of Through-Thickness Surface of Steel Plate Effective grain size of the through-thickness surface: 20 μm or less

The effective grain size of the through-thickness surface is important together with the microstructures of the surface layer, the 1/4t portion, and the 1/2t portion of steel plate described above in order to secure excellent toughness in a very low temperature environment.

When the effective grain size of the through-thickness surface exceeds 20 μm, the toughness in the very low temperature environment is decreased. Therefore, the effective grain size of the through-thickness surface is set to 20 μm or less. The effective grain size of the through-thickness surface is preferably 15 μm or less.

In addition, a through-thickness surface is a cut section parallel to the longitudinal direction of the steel pipe and perpendicular to the surface of the steel plate. The effective grain size is the average value of equivalent circle diameters of portions (grains) surrounded by boundaries having a crystal orientation difference of 15° or more, which is obtained by analyzing the through-thickness surface using an electron back scattering diffraction pattern (EBSP). There are cases where the effective grain size is not uniform in the through-thickness surface. In this case, the average value of the effective grain size in the surface layer, the 1/4t portion, and the 1/2t portion of the steel plate can be regarded as the effective grain size of the steel plate of the steel pipe according to the present embodiment.

(v) Hardness Distribution

The mechanical properties of the steel plate of the steel pipe according to the present embodiment in a very low temperature environment are more significantly improved when the hardness distribution of the steel plate in the plate thickness direction satisfies Formula (3), and the difference between the hardness of the surface layer and the hardness of the 1/2t portion is 30 Hv or less.

$$\text{Hardness of surface layer} \geq \text{hardness of 1/4t portion} \geq \text{hardness of 1/2t portion}\ldots(3)$$

In a case where the steel plate is subjected to controlled cooling, the cooling rate of the surface layer of the steel plate becomes larger than the cooling rate inside the steel plate. Therefore, the hardness of the surface layer of the steel plate becomes higher than the hardness inside the steel plate. This means that the toughness of the surface layer of the steel plate is lower than the toughness inside the steel plate, a difference occurs in the toughness in the plate thickness direction, and the toughness of the steel plate in a very low temperature environment is greatly reduced.

However, the present inventors have found that when the hardness distribution of the steel plate of the steel pipe according to the present embodiment in the plate thickness direction satisfies Formula (3) and the difference between the hardness of the surface layer and the hardness of the 1/2t portion is 30 Hv or less, variation in the mechanical properties in the plate thickness direction is reduced, and better mechanical properties that can withstand a very low temperature environment can be secured. A method of forming a hardness distribution satisfying Formula (3) and having a difference between the hardness of the surface layer and the hardness of the 1/2t portion being 30 Hv or less will be described later.

The hardness of the surface layer of the steel plate of the steel pipe is obtained, for example, by cutting the steel pipe to create a cut section parallel to the longitudinal direction of the steel pipe and perpendicular to the surface of the steel plate, performing Vickers hardness measurement at 10 points at intervals of 1 mm along the longitudinal direction of the steel pipe at a position at a depth of 0.5 mm from the surface of the steel plate, and averaging the measurement results. The hardness of the 1/4t portion and the hardness of the 1/2t portion are obtained, for example, by performing Vickers hardness measurement at 10 points at intervals of 1 mm along the longitudinal direction of the steel pipe at a position at a depth of 1/4t and a position at a depth of 1/2t from the surface of the steel plate, and averaging the measurement results. In any Vickers hardness measurement, a load is preferably set to 10 kg.

The steel plate of the steel pipe according to the present embodiment, that is, the cylindrical base material portion has the above-described structure, and thus has mechanical properties that can withstand a very low temperature environment and excellent field weldability. Moreover, since the weldability of the steel plate is excellent, the welded portion of the steel pipe according to the present embodiment is also excellent in mechanical properties like the steel plate. Therefore, the steel pipe according to the present embodiment is particularly suitable as a steel pipe for a pipeline laid in a very low temperature environment.

The plate thickness of the steel plate of the steel pipe according to the present embodiment is not particularly limited. However, in a case where the plate thickness of the steel plate is 25.4 mm or more and the Ceq of the steel plate is 0.35 to 0.53, the steel pipe according to the present embodiment shows a particularly remarkable superiority over steel pipes in the related art. This is because as the plate thickness of the steel plate increases and the Ceq of the steel plate increases, it becomes more difficult to suppress variation in the microstructure and hardness of the steel plate along the plate thickness direction. Since the steel pipe according to the present embodiment is obtained by the above-described manufacturing method including controlled cooling, which is characterized by controlling the cooling rate inside the steel plate, even if the plate thickness and Ceq of the steel plate are large, variation in the hardness in the plate thickness direction is suppressed, and the microstructures of the surface layer of the steel plate, the 1/4t portion of the steel plate, and the 1/2t portion of the steel plate are within predetermined ranges.

The welded heat-affected zone of the steel pipe according to the present embodiment is not particularly limited. Since the steel pipe according to the present embodiment uses the steel plate having high weldability as its base material, the welded heat-affected zone exhibits high strength and high toughness even in a very low temperature environment. A weld metal portion of the steel pipe according to the present embodiment is not particularly limited, and is obtained by welding the steel plate according to the present embodiment using a wire and a flux for general cryogenic use in the technical field to which the steel plate according to the present embodiment belongs.

Next, a method of manufacturing the steel pipe according to the present embodiment will be described.

The method of manufacturing the steel pipe according to the present embodiment includes: a step of heating a steel piece (steel slab) having the chemical composition of the steel plate of the steel pipe according to the present embodiment; a step of performing hot rolling on the steel piece to obtain a thick steel plate; a step of performing first cooling on the thick steel plate by spraying cooling water; a step of reheating the thick steel plate; a step of performing second cooling on the thick steel plate to obtain a steel plate for a steel pipe; a step of forming the steel plate for a steel pipe into a cylindrical shape; and a step of welding butted both end portions of the steel plate for a steel pipe formed into a cylindrical shape.

In this manufacturing method, in the heating step, the heating temperature of the steel piece is 950°C or higher. The step of performing hot rolling is performed in a non-recrystallization temperature range with a rolling reduction ratio of 3 or more, and a rolling finishing temperature Tz in the step of performing hot rolling exceeds Ar3 point - 10°C. In the step of performing first cooling, the spraying of the cooling water is controlled so as to cause the temperature of a 1/4t portion of the thick steel plate to be retained for 1 second or longer within a range of 650°C to 750°C in the subsequent reheating step, a cooling stop temperature Tb in the step of performing first cooling is 500°C or lower on the surface of the thick steel plate, and a cooling rate Vc in the step of performing first cooling is 50 °C/s or more. In the reheating step, a reheating temperature Tx is 550°C or higher, and a reheating rate Vr in the reheating step is 50 °C/s or more. In the step of performing second cooling, the cooling rate of a 1/4t portion of the steel plate for a steel pipe is within a ferritic and bainitic transformation range, and the cooling rate of a 1/2t portion of the steel plate for a steel pipe is within a ferritic and bainitic transformation range.

In a case where the steel plate is subjected to controlled cooling, the cooling rate is decreased from the surface of the steel plate toward the inside of the steel plate. Therefore, the generated microstructure varies along the plate thickness direction. This means that there is a difference in mechanical properties, particularly toughness, in the plate thickness direction of the steel plate. When this difference is large, the toughness in a very low temperature environment is significantly decreased.

However, the present inventors found that in a microstructure generated by controlled cooling after hot rolling, a difference in cooling rate in a plate thickness direction can be controlled using reheating after cooling, and a change in the microstructure caused by the difference in the cooling rate can be suppressed by appropriately performing the control. Therefore, mechanical properties that can withstand a very low temperature environment can be secured.

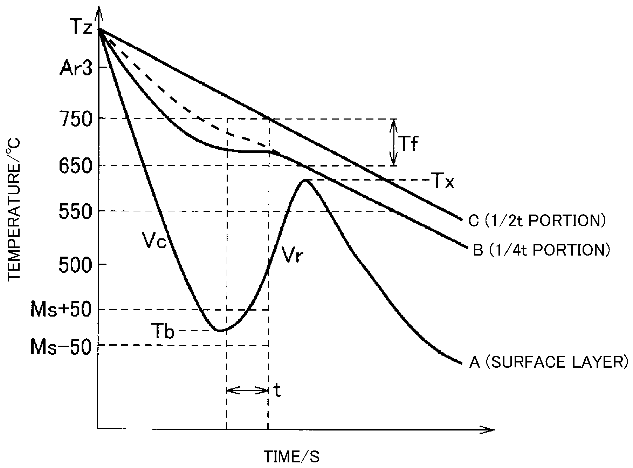

FIG. 1 schematically shows an example of controlled cooling. A is a cooling curve of the surface layer of the thick steel plate, B is a cooling curve of the 1/4t portion of the thick steel plate, and C is a cooling curve of the 1/2t portion of the thick steel plate. The surface layer of the thick steel plate is a region from the surface of the thick steel plate to a depth of 1 mm, the 1/4t portion of the thick steel plate is a position at a depth of 1/4 of the plate thickness t of the thick steel plate from the surface of the steel plate and the vicinity thereof, and 1/2t portion of the thick steel plate is a position (that is, the central plane of the thick steel plate) at a depth of 1/2 of the thickness t of the thick steel plate from the surface of the steel plate and the vicinity thereof. Hereafter, the characteristic requirements of the method of manufacturing the steel pipe according to the present embodiment will be described with reference to FIG. 1.

Chemical Composition of Steel Piece: Same as Chemical Composition of Steel Plate of Steel Pipe According to Present Embodiment

The steel piece which is the material of the steel pipe according to the present embodiment is not particularly limited as long as the chemical composition thereof is within the range of the chemical composition of the steel plate of the steel pipe described above. A method of manufacturing the steel piece can be appropriately selected in consideration of economic feasibility and the like.

Steel Piece Heating Temperature in Hot Rolling: 950°C or Higher

The steel piece is heated before being subjected to the hot rolling. The steel piece is heated to 950°C or higher before being subjected to hot rolling in order to perform the hot rolling on the steel piece in an austenite range and refine grains. The steel piece heating temperature is preferably set to 1000°C or higher. The upper limit of the steel piece heating temperature is not particularly limited. However, in a case where the steel piece heating temperature is too high, there are cases where the hot rolling temperature in hot rolling described later becomes too high. The hot rolling is performed in the non-recrystallization temperature range, and here, it is necessary to suppress coarsening of the austenite grains. Therefore, the steel piece heating temperature in the heating before the hot rolling is preferably 1200°C or lower.

However, in a case where the Ac3 point of the steel piece is 950°C or higher, in order to performing the hot rolling on the steel piece in the austenite range, the steel piece needs to be heated to the Ac3 point or higher before being subjected to the hot rolling. The Ac3 point is a temperature at which the transformation from ferrite to austenite is completed when steel is heated, and varies depending on the chemical composition of the steel. The Ac3 point can be approximately calculated based on Formula (4). In the formula, the element symbol enclosed in parentheses indicates the amount in the chemical composition of the thick steel plate (that is, the chemical composition of the steel plate of the steel pipe) by unit mass%.

$$Ac3 = 937.2 - 436.5 \times [C] + 56 \times [Si] - 19.7 \times [Mn] - 16.3 \times [Cu] - 26.6 \times$$

$$[Ni] - 4.9 \times [Cr] + 38.1 \times [Mo] + 124.8 \times [V] + 136.3 \times [Ti] - 19.1 \times [Nb] + 198.4 \times$$

$$[Al] + 3315 \times [B]\ldots(4)$$

In Formula (4), the element symbol enclosed in parentheses indicates the amount of the corresponding element in the chemical composition of the steel piece by unit mass%.

Rolling Reduction Ratio in Non-Recrystallization Temperature Range Rolling in Hot Rolling: 3 or More

The steel piece heated to the above temperature or higher is hot-rolled. This hot rolling includes hot rolling performed in a recrystallization temperature range and hot rolling performed in a non-recrystallization temperature range. The conditions for the hot rolling performed in the recrystallization temperature range are not particularly limited as long as the hot rolling performed in the non-recrystallization temperature range is prevented from being impeded under predetermined conditions, which will be described later.

In the non-recrystallization temperature range, it is necessary to perform hot rolling at a rolling reduction ratio of 3 or more. In addition, in a case where the hot rolling in the non-recrystallization temperature range is performed in a plurality of passes, the total rolling reduction ratio of all the passes in the non-recrystallization temperature range needs to be 3 or more. By the hot rolling in this non-recrystallization temperature range, the grains are refined, and a microstructure having an effective grain size of 20 $\mu$m or less is secured. The rolling reduction ratio of the hot rolling in the non-recrystallization temperature range may be set as appropriate according to the desired plate thickness, and therefore the upper limit of the rolling reduction ratio is not particularly limited. However, the upper limit is usually 5 or less.

Hot Rolling Finishing Temperature: (Ar3 point - 10°C)

The hot rolling finishing temperature Tz (°C) is set to a temperature exceeding the Ar3 point - 10°C, that is, a temperature in the austenite range and a temperature range slightly lower than the austenite range (see FIG. 1). The hot rolling finishing temperature Tz is the temperature of the surface of the thick steel plate immediately after leaving the last rolling pass in the hot rolling. A required microstructure is formed in each of the surface layer of the steel plate, the thickness 1/4t portion, and the thickness 1/2t portion by the controlled cooling and reheating after finishing the hot rolling. In order to realize this, it is necessary to form the structure of the steel plate after the finish of the hot rolling and before the controlled cooling into substantially austenite. The Ar3 point is a temperature at which transformation from austenite to ferrite starts when steel is cooled, and varies depending on the chemical composition of the steel. The Ar3 point can be approximately calculated based on Formula (5). In the formula, the element symbol enclosed in parentheses indicates the amount in the chemical composition of the thick steel plate (that is, the chemical composition of the steel plate of the steel pipe) by unit mass%, and the symbol "t" indicates the plate thickness of the thick steel plate in unit mm. In view of the finish of the hot rolling in the austenite range, it is preferable that the hot rolling finishing temperature Tz is set to the Ar3 point or higher. Therefore, in FIG. 1, Tz is described as a temperature higher than the Ar3 point. However, when the hot rolling finishing temperature Tz is set to be higher than the Ar3 point - 10°C, the structure of the steel plate before the controlled cooling and after the finish of the hot rolling can be substantially austenite.

$$\text{Ar3 (°C)} = 910 - 310 \times [\text{C}] - 80 \times [\text{Mn}] - 20 \times [\text{Cu}] - 15 \times [\text{Cr}] - 55 \times [\text{Ni}] -$$

$$80 \times [\text{Mo}] + 0.35 \, (\text{t} - 8) \ldots (5)$$

In Formula (5), the element symbol enclosed in parentheses indicates the amount of the corresponding element in the chemical composition of the steel plate by unit mass%.

Controlled Cooling after Finish of Hot Rolling (First Cooling)

The surface of the thick steel plate at the hot rolling finishing temperature Tz (°C) is subjected to controlled cooling to a cooling stop temperature Tb (°C) of lower than 500°C at a cooling rate Vc (see "cooling curve A" in FIG. 1). The cooling stop temperature Tb is the lowest temperature of the surface of the steel plate in the process of the first cooling and reheating, and is usually the temperature of the surface of the thick steel plate at the moment when the spraying of a cooling medium onto the surface of the steel plate is finished. The cooling rate Vc is a value obtained by dividing the difference between the hot rolling finishing temperature Tz and the cooling stop temperature Tb by the time required for lowering the temperature of the surface of the thick steel plate from the hot rolling finishing temperature Tz to the cooling stop temperature Tb. Since the optimum value of the cooling rate Vc varies depending on the rolling finishing temperature Tz (°C) and the steel type, the cooling rate Vc of the surface of the thick steel plate is not particularly limited, but is preferably 50 °C/s or more. With this controlled cooling, the microstructure of the surface layer of the steel plate can be within the above-mentioned range.

In order to form the surface layer of the steel plate having a more preferable microstructure, it is preferable that the cooling rate Vc of the surface of the thick steel plate is not less than a critical cooling rate Vc90 defined by Formulas (6) and (7). The critical cooling rate Vc90 indicates the minimum cooling rate required to form the structure into a martensite structure.

$$Vc90 = 10^{(3.69 - 0.75 \times \beta)} \ldots (6)$$

$$\beta = 2.7 \times [C] + 0.4 \times [Si] + [Mn] + 0.45 \times ([Ni] + [Cu]) + 2 \times [V] + 0.8 \times [Cr]$$

$$+ [Mo] \ldots (7)$$

In Formula (7), the element symbol enclosed in parentheses indicates the amount of the corresponding element by unit mass%.

Cooling Stop Temperature Tb (°C) on Surface of Thick Steel Plate: Less than 500°C

When the cooling stop temperature Tb (°C) of the surface of the thick steel plate is 500°C or higher, the strength of the steel plate is lowered. Therefore, the cooling stop temperature Tb (°C) on the surface of the thick steel plate is set to be less than 500°C.

In order to secure polygonal ferrite in an area ratio of 50% or less in the surface layer of the steel plate, the cooling stop temperature Tb (°C) of the surface of the thick steel plate is preferably equal to or higher than Ms point - 50°C and equal to or lower than Ms point + 50°C (see "cooling curve A" in FIG. 1). The Ms point is obtained by Formula (8).

$$Ms = 545 - 330 \times [C] + 2 \times [Al] - 14 \times [Cr] - 13 \times [Cu] - 23 \times [Mn] - 5 \times$$

$$[Mo] - 4 \times [Nb] - 13 \times [Ni] - 7 \times [Si] + 3 \times [Ti] + 4 \times [V] \ldots (8)$$

In Formula (8), the element symbol enclosed in parentheses indicates the amount of the corresponding element by unit mass%.

In addition, the reheating that occurs in the steel plate after the first cooling is caused by the temperature difference between the surface of the steel plate and the inside of the steel plate. Therefore, the form of the reheating can be controlled by controlling this temperature difference during the first cooling. In a case where the first cooling is performed by spraying the cooling medium such as cooling water onto the steel plate, the temperature inside the steel plate is affected by factors such as the thickness of the steel plate, the hot rolling finishing temperature Tz, the temperature of the cooling medium, the flow rate of the cooling medium, and the flow velocity of the cooling medium. By changing these factors, the temperature inside the steel plate can be controlled, and therefore the form of the reheating can be controlled. By conducting a thermal behavior simulation using the factors that can affect the temperature inside the steel plate as variables, conditions for controlling the temperature inside the steel plate can be determined.

In the first cooling, in addition to controlling the cooling rate and cooling stop temperature of the surface of the steel plate as described above, the cooling medium spraying conditions need to be controlled so that the form of the subsequent reheating is within a predetermined range, which will be described later.

Reheating after Controlled Cooling

After the controlled cooling, the surface of the steel plate is reheated at a reheating rate Vr (°C/s) from the cooling stop temperature Tb (°C) to the reheating temperature Tx (°C) in a temperature range of 550°C to 650°C (see "cooling curve A" in FIG. 1). The reheating temperature Tx is defined as the maximum temperature of the surface of the thick steel plate during the reheating, and the reheating rate Vr is defined as the value obtained by dividing the difference between the cooling stop temperature Tb and the reheating temperature Tx by the time required for raising the temperature of the surface of the thick steel plate from the cooling stop temperature Tb to the reheating temperature Tx. The reheating rate Vr of the surface of the steel plate is preferably set to 50 °C/s or more.

By this reheating, martensite generated in the surface layer of the steel plate is tempered, and a microstructure containing

(a) polygonal ferrite in an area ratio of 50% or less, and
(b) a remainder: one or more of bainite, acicular ferrite, and tempered martensite,

can be obtained.

Furthermore, when the surface of the steel plate is reheated to the reheating temperature Tx (°C) in the temperature range of 550°C to 650°C, as indicated by the cooling curve B in FIG. 1, the thickness 1/4t portion needs to be retained in a temperature range Tf (°C), which is a ferrite range of 650°C to 750°C, for 1 second or longer (see "t" in FIG. 1). By retaining the thickness 1/4t portion within the temperature range Tf for 1 second or longer, soft polygonal ferrite is generated in the thickness 1/4t portion, and the microstructure described above can be obtained in the thickness 1/4t portion. In addition, "temperature retention" in reheating includes not only strict isothermal retention but also suppressing a temperature change rate within ± 5 °C/sec or less. Therefore, "the thickness 1/4t portion is retained in the temperature range Tf which is the ferrite region of 650°C to 750°C for 1 second or longer" means that the cooling history of the thickness 1/4t portion has 1 second or longer as a period in which the temperature change rate is suppressed within ± 5 °C/sec in the temperature range Tf.

In normal controlled cooling and reheating, the above-described temperature retention does not occur in the thickness 1/4t portion, and for example, a temperature history indicated by broken line in FIG. 1 occurs. However, for example, by causing heat transfer to occur from the 1/2t portion to the 1/4t portion during the reheating by controlling the cooling conditions of the first cooling so as to increase the temperature difference between the 1/2t portion and the 1/4t portion, the above-described temperature retention can be achieved. As described above, the cooling conditions for increasing the temperature difference between the 1/2t portion and the 1/4t portion are obtained by conducting a thermal behavior simulation using the factors that can affect the temperature inside the steel plate as variables.

Furthermore, when a steel plate surface temperature Tx after the reheating is lower than 550°C, the temperature retention of the thickness 1/4t portion occurs at below the temperature range Tf (°C), that is, less than 650°C, and the required microstructure cannot be obtained in the thickness 1/4t portion. Therefore, the steel plate surface temperature Tx after the reheating is set to 550°C or higher. The steel plate surface temperature Tx is preferably 600°C or higher.

On the other hand, when the steel plate surface temperature Tx after the reheating exceeds 650°C, the temperature retention of the thickness 1/4t portion occurs at above the temperature range Tf (°C), that is, higher than 750°C, the required microstructure cannot be obtained in the thickness 1/4t portion. Therefore, the steel plate surface temperature Tx after reheating is set to 650°C or lower. The steel plate surface temperature Tx is preferably 630°C or lower.

Cooling after Reheating (Second Cooling)

After the reheating,

(ii-1) the surface layer of the thick steel plate is cooled as it is, or is reheated again after being cooled once and then cooled to room temperature,
(ii-2) the 1/4t portion of the thick steel plate is cooled at a cooling rate that enters a ferritic and bainitic transformation range in a temperature range of at least 600°C to 500°C, and
(ii-3) the 1/2t portion of the thick steel plate is cooled at a cooling rate that enters a ferritic and bainitic transformation range in a temperature range of at least 600°C to 500°C.

When the surface layer of the steel plate is cooled as it is, it is possible to obtain a surface layer having a microstructure containing

(a) polygonal ferrite in an area ratio of 5% or less, and
(b) a remainder containing one or more of bainite, acicular ferrite, and tempered martensite.

When reheating is performed one or more times during the cooling of the surface layer of the steel plate, it is possible to obtain a surface layer having a microstructure containing

(a') polygonal ferrite in an area ratio of 10% or less, and
(b') a remainder containing one or more of bainite, acicular ferrite, and tempered martensite.

After the reheating, by cooling the 1/4t portion at a cooling rate that enters the ferritic and bainitic transformation range in a temperature range of at least 600°C to 500°C, a 1/4t portion having a microstructure containing (a) polygonal ferrite in an area ratio of 30% or less, and (b) a remainder: one or both of bainite and acicular ferrite can be obtained. The cooling rate that enters the ferritic and bainitic transformation range is determined according to the chemical composition of the steel plate, and can be appropriately obtained by experiment.

Furthermore, after the reheating, by cooling the 1/2t portion at a cooling rate that enters the ferritic and bainitic transformation range in a temperature range of at least 600°C to 500°C, a 1/2t portion having a microstructure containing (a) polygonal ferrite in an area ratio of 10% or more, and (b) a remainder: one or both of bainite and acicular ferrite can be obtained. The cooling rate that enters the ferritic and bainitic transformation range is determined according to the chemical composition of the steel plate, and can be appropriately obtained by experiment.

In the method of manufacturing a steel pipe according to the present embodiment, it is necessary to control the temperature inside the thick steel plate (the 1/4t portion and the 1/2t portion). However, it is difficult to measure the temperature history inside the thick steel plate. The measurement of the temperature history inside the thick steel plate can be performed, for example, by carrying out various manufacturing processes in a state where a temperature measuring unit such as a thermocouple is disposed inside the thick steel plate, but this greatly impairs the productivity of the steel pipe. Therefore, the temperature history inside the thick steel plate may be estimated by conducting a simulation based on some actual measurement data obtained by the above-mentioned unit, and manufacturing conditions, particularly cooling medium spraying conditions and the like may be determined based on the estimated value. Even in the operation based on the estimated value, the steel pipe according to the present embodiment can be obtained.

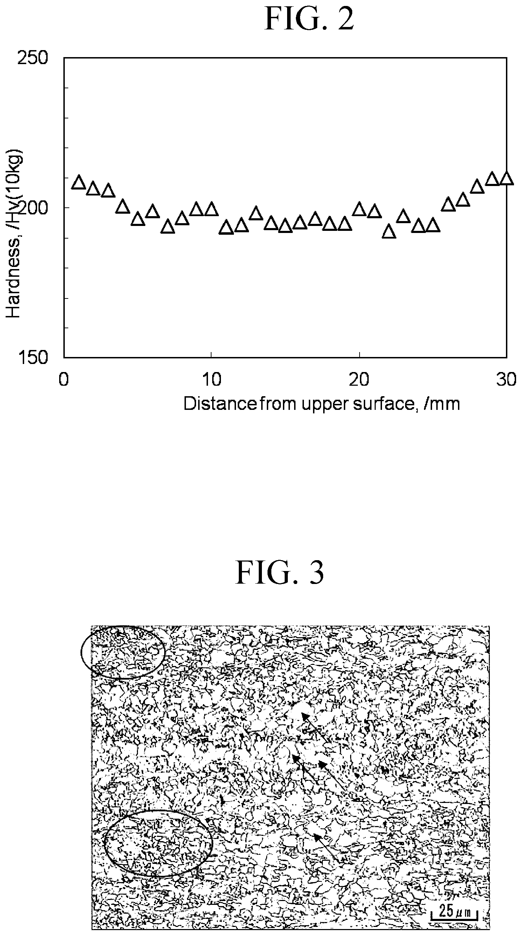

Here, an example of a preferable hardness distribution in the plate thickness direction of the steel plate of the steel pipe according to the present embodiment having a plate thickness of 30 mm manufactured according to the above-described manufacturing method is shown in FIG. 2. A hardness Hv is a hardness measured with a weight of 10 kg.

As shown in FIG. 2, in the steel pipe according to the present embodiment, the hardness distribution from the surface layer of the steel plate to 1/2t portion is uniformized, and the hardness difference from the surface layer to 1/2t portion is less than 20 Hv. A decrease in the hardness at the 1/2t portion is caused by the presence of polygonal ferrite in an area ratio of 30% or less in the 1/2t portion. This decrease in the hardness does not greatly affect the very low temperature toughness of the steel plate. However, when the area ratio of polygonal ferrite in the 1/2t portion exceeds 30%, it is difficult to secure sufficient Charpy absorbed energy in the 1/2t portion. Since the hardness distribution from the surface layer of the steel plate to the 1/2t portion is uniformized, the steel pipe according to the present embodiment can secure a Charpy absorbed energy at -60°C of 200 J or more, and a DWTT ductile fracture surface ratio of 85% more.

A method of forming the steel plate for a steel pipe is not particularly limited, and cold working is preferable in terms of dimensional accuracy. Warm working and hot working can also be used. Next, both end portions of the steel plate for a steel pipe formed into a cylindrical shape are butted up against each other and welded. A welding method is not limited to specific welding, and submerged arc welding is preferable.

In the method of manufacturing a steel pipe according to the present embodiment, the welded portion may be subjected to a heat treatment so that a structure that impairs the toughness (ferrite and pearlite in an area ratio of more than 10%) is not generated in the welded portion. The heat treatment temperature may be in a normal temperature range, but is particularly preferably in a range of 300°C to Ac1 point.

A steel plate according to another embodiment of the present invention is the steel plate (base material portion) of the steel pipe according to the present embodiment, and is a steel plate for a steel pipe of an intermediate material in the above-described method of manufacturing a steel pipe according to the present embodiment. That is, the steel plate according to the present embodiment contains, as a chemical composition, by unit mass%, C: 0.030% to 0.100%, Si: 0.01% to 0.50%, Mn: 0.50% to 2.50%, P: 0.050% or less, S: 0.005% or less, Al: 0.020% or less, Ti: 0.003% to 0.030%, O: 0.0001% to 0.005%, Nb: 0.0001% to 0.20%, N: 0% to 0.008%, Cu: 0% to 1.00%, Ni: 0% to 1.00%, Mo: 0% to 1.00%, Cr: 0% to 1.00%, V: 0% to 0.10%, B: 0% to 0.005%, Zr: 0% to 0.050%, Ta: 0% to 0.050%, Mg: 0% to 0.010%, Ca: 0% to 0.005%, REM: 0% to 0.005%, Y: 0% to 0.005%, Hf: 0% to 0.005%, Re: 0% to 0.005%, W: 0% to 0.005%, and a remainder consisting of Fe and impurities, in which (ii) Ceq defined by Formula (1) is 0.30 to 0.53 and Pcm defined by Formula (2) is 0.100 to 0.165, (iii-1) the microstructure of the surface layer which is a region from the surface of the steel plate to a depth of 1 mm contains (a) polygonal ferrite in an area ratio of 0% to 50%, and (b) a remainder containing one or more of bainite, acicular ferrite, and tempered martensite, (iii-2) the microstructure of the 1/4t portion of the steel plate contains (a) polygonal ferrite in an area ratio of 10% to 40%, and a remainder containing one or both of bainite and acicular ferrite, (iii-3) the microstructure of the 1/2t portion of the steel plate contains (a) polygonal ferrite in an area ratio of 5% to 30%, and (b) a remainder containing one or both of bainite and acicular ferrite, (iv) the effective grain size of a through-thickness surface of the steel plate is 20 $\mu$m or less, and (v) in the through-thickness surface of the steel plate, the hardness distribution in the plate thickness direction satisfies Formula (3), and a difference between the hardness of the surface layer and the hardness of the 1/2t portion is 30 Hv or less.

$$Ceq = [C] + [Mn] / 6 + ([Ni] + [Cu]) / 15 + ([Cr] + [Mo] + [V]) / 5 \ldots \text{Formula}$$

(1)

$$Pcm = [C] + [Si] / 30 + ([Mn] + [Cu] + [Cr]) / 20 + [Ni] / 60 + [Mo] / 15 + [V] /$$

$$10 + 5 [B] \ldots \text{Formula (2)}$$

$$\text{hardness of the surface layer} \geq \text{hardness of the 1/4t portion (t: plate thickness)}$$

$$\geq \text{hardness of the 1/2t portion} \ldots \text{Formula (3)}$$

where, in Formula (1) and Formula (2), the element symbol enclosed in parentheses indicates the amount of the corresponding element in the chemical composition of the steel plate by unit mass%.

Since it is not necessary to perform a heat treatment on the base material portion (the steel plate) of the steel pipe according to the present embodiment, the steel plate according to the present embodiment is substantially the same as the steel plate of the steel pipe according to the embodiment described above. Therefore, the steel plate according to the present embodiment has mechanical properties that can withstand a very low temperature environment, similarly to the steel pipe according to the embodiment described above. Moreover, preferable limitation conditions in the steel plate of the steel pipe according to the embodiment described above are also applicable to the steel plate according to the present embodiment.

[Examples]

Next, examples of the present invention will be described. The conditions in the examples are one example of conditions adopted for confirming the feasibility and effects of the present invention, and the present invention is not limited to the example of conditions. The present invention can adopt various conditions as long as the object of the present invention is achieved without departing from the gist of the present invention.

(Example 1)

Molten steels having the chemical compositions shown in Tables 1 to 3 were continuously cast to manufacture steel slabs having a thickness of 240 mm. The unit of the amount of each element shown in Tables 1 to 3 is mass%, and the remainder of the chemical composition of each of invention examples and comparative examples consisted of iron and impurities. In addition, the amount of elements that are below the impurity level is shown as blank in the tables. In addition, the amount of elements outside the range of the present invention is underlined in the tables. In addition, Ceq, Pcm, Ac3, Ar3, $\beta$, Vc90, and Ms described in Table 4 are calculated based on Formulas (1), (2), and (4) to (8).

From these steel slabs, steel plates having the configurations shown in Table 7 were manufactured under the hot rolling conditions shown in Table 5 and the reheating conditions shown in Table 6. In the tables, a heating temperature before hot rolling was described as "heating temperature", the total rolling reduction ratio of the hot rolling in a non-recrystallization temperature range was described as "rolling reduction ratio", the plate thickness of a thick steel plate after the hot rolling was described as "plate thickness", and a hot rolling finishing temperature was described as "finishing temperature". Also, regarding the reheating conditions of the surface layer of the thick steel plate disclosed in the tables, a cooling rate after the hot rolling was described as "cooling rate", a cooling stop temperature after the hot rolling was described as "cooling stop temperature", and the maximum temperature during reheating was described as "reheating temperature". Regarding the reheating conditions of the 1/4t portion of the thick steel plate disclosed in the tables, a temperature in a period in which a temperature change rate during the reheating was suppressed within $\pm$ 5 °C/sec or less was described as "retention temperature", the length of the period in which the temperature change rate was suppressed within $\pm$ 5 °C/sec or less was described as "retention time", and a cooling rate in a temperature range of 600°C to 500°C after the reheating was described as "cooling rate". Regarding the reheating conditions of the 1/2t portion of the thick steel plate disclosed in the tables, a cooling rate in the temperature range of 600°C to 500°C after the reheating was described as "cooling rate". In the manufacturing conditions, the retention temperature, the retention time, and the cooling rate in the temperature range of 600°C to 500°C of the 1/4t portion of the thick steel plate, and the cooling rate in the temperature range of 600°C to 500°C of the 1/2t portion of the thick steel plate are estimated values obtained by a simulation using the cooling medium spraying conditions, the surface temperature history of the thick steel plate, the size of the thick steel plate, and the hot rolling finishing temperature as variables. In the tables showing the manufacturing conditions, inappropriate values were underlined. In a case where the above-described temperature retention did not substantially occur in the 1/4t portion of the thick steel plate during the reheating, the symbol "-" was described in "retention temperature" and the retention time was described as "0.0". In all the invention examples and comparative examples, the cooling rate of the 1/4t portion of the thick steel plate and the cooling rate of the 1/2t portion of the thick steel plate were set to the cooling rates that enter the ferritic and bainitic transformation range.

Samples taken from the central part of the steel plate in the width direction and the longitudinal direction thereof (the same as the longitudinal direction of the steel plate and the longitudinal direction of the steel pipe) were evaluated by the following methods. The evaluation results are shown in Table 7 and Table 8.

Hardness of the surface layer, which is a region from the surface to a depth of 1 mm: In a cross section of the steel plate, Vickers hardness measurement was performed under a load of 10 kg at 10 points at intervals of 1 mm along the longitudinal direction of the steel plate at a position at a depth of 0.5 mm from the surface of the steel plate, and the average value thereof was regarded as the Vickers hardness of the surface layer.

Hardness of the 1/4t portion: In a cross section of the steel plate, Vickers hardness measurement was performed under a load of 10 kg at 10 points at intervals of 1 mm along the longitudinal direction of the steel plate at a position at a depth of 1/4t from the surface of the steel plate, and the average value thereof was regarded as the Vickers hardness of the 1/4t portion.

Hardness of the 1/2t portion: In a cross section of the steel plate, Vickers hardness measurement was performed under a load of 10 kg at 10 points at intervals of 1 mm along the longitudinal direction of the steel plate at a position at a depth of 1/2t from the surface of the steel plate, and the average value thereof was regarded as the Vickers hardness of the 1/2t portion.

In the tables, the difference between the hardness of the surface layer and the hardness of the 1/2t portion was described as "hardness difference". Hardness differences that were outside the range of the present invention were underlined. Moreover, in samples in which the following hardness distribution was not satisfied, the hardness of the 1/4t portion was underlined.

$$\text{Hardness of surface layer} \geq \text{hardness of 1/4t portion} \geq \text{hardness of 1/2t portion}$$

Microstructure in each portion: The cross section of the sample was polished to form an observed section with a metallic gloss, and the observed section was immersed in a nital solution (that is, a solution of 3% nitric acid and 97% ethanol) to be etched. The structure of the observed section of the test piece was observed with an optical microscope. The area ratio (PF fraction) of polygonal ferrite was obtained by image analysis of the optical micrograph. In a case where a structure other than polygonal ferrite, bainite, acicular ferrite, and tempered martensite was found in the microstructure of the surface layer, and in a case where a structure other than bainite and acicular ferrite was found in the remainders of the microstructures of the 1/4t portion and the 1/2t portion, the said effect was described in the tables. In the tables showing the structure of the steel plate, the symbol "F" is ferrite, the symbol "PF" is polygonal ferrite, the symbol "M" is martensite, the symbol "B" is bainite, the symbol "TM" is tempered martensite, the symbol "AF" is acicular ferrite, and the symbol "DF" is deformed ferrite. In a case where the structure contained 99 area% or more of polygonal ferrite and tempered martensite, "PF + TM" was described in the table, in a case where the structure contained 99 area% or more of polygonal ferrite and bainite, "PF + B" was described in the table, and in a case where the structure contained 99 area% or more of polygonal ferrite and acicular ferrite, "PF + AF" was described in the table. In a case where more than 1 area% of martensite or deformed ferrite was contained in the structure, the said effect was described in the table.

Effective grain size of the through-thickness surface: The average value of equivalent circle diameters of portions (grains) surrounded by boundaries having a crystal orientation difference of 15° or more, which was obtained by analyzing the through-thickness surface using an electron backscatter diffraction pattern (EBSP), was described in the table.

Charpy impact value at -60°C ("vE-60"): obtained by conducting a test based on JIS Z 2242 "Method for Charpy pendulum impact test of metallic materials" at -60°C. The sampling position of the test piece was set to the 1/2t portion.

DWTT ductile fracture surface ratio ("DWTT"): obtained by a test based on API 5L 2000.

Tensile strength ("TS") of the overall thickness in the width direction: obtained by a test based on API 5L 2000.

The acceptance criteria value for the Charpy impact value at -60°C was set to 200 J. The acceptance criteria value for the DWTT ductile fracture surface ratio was set to 85%. The acceptance criteria value for the tensile strength of the overall thickness in the width direction was set to 530 MPa. A steel plate satisfying all of these acceptance criteria was determined as a steel plate excellent in strength and low temperature toughness.

Furthermore, FIGS. 3 to 5 show photographs of microstructures observed by the above-described methods.

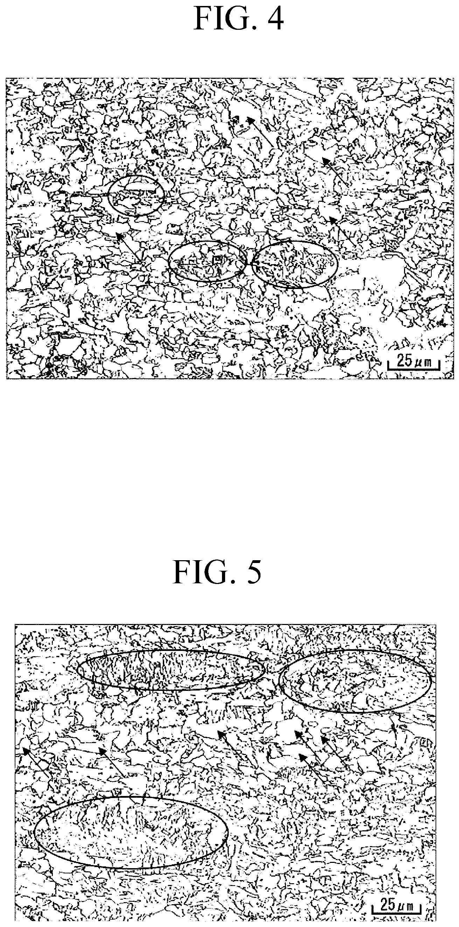

FIG. 3 shows the microstructure of the surface layer. The white lump-like structure is polygonal ferrite (structure indicated by arrow), and the remaining part is tempered martensite (circled structure). FIG. 4 shows the microstructure of the 1/4t portion. The white lump-like structure is polygonal ferrite (structure indicated by arrow), and the remaining part is bainite (circled structure). FIG. 5 shows the microstructure of the 1/2t portion. The white lump-like structure is polygonal ferrite (structure indicated by arrow), and the remaining part is bainite (circled structure).

(Example 2)

The steel plate obtained by the above-described experiment was cold-worked into a cylindrical shape, and both end portions of the cylindrical steel plate were butted up against each other and subjected to submerged arc welding to manufacture a steel pipe. The welded portion of steel pipe A21 was subjected to a heat treatment for heating to 550°C.

From a position at 90° with the welded portion of the steel pipe as 0°, the Charpy impact value at -60°C of the base material portion ("base material $vE_{-60}$"), the DWTT ductile fracture surface ratio of the base material portion ("DWTT"), and the yield strength ("YS") and tensile strength ("TS") of the overall thickness of the base material portion in the circumferential direction were measured. The yield strength was measured using a value at 0.5% under load in a stress-strain curve. Furthermore, in order to evaluate the toughness of the welded portion, the Charpy impact value at -50°C of the welded portion ("welded portion vE$_{-50}$") was measured. The welded portion vE$_{-50}$ was obtained by conducting a test based on JIS Z 2242 "Method for Charpy pendulum impact test of metallic materials" at -50°C. The sampling position of the test piece was set to the outer surface side of the steel pipe, and a V-notch was formed in a fusion line portion (FL portion) of the outer surface of the steel pipe. Measurement methods of the other properties were the same as the measurement methods in Example 1.

The acceptance criteria value for the Charpy impact value at -60°C (vE$_{-60}$) was set to 200 J. The acceptance criteria value for the DWTT ductile fracture surface ratio was set to 85%. The acceptance criteria value for the tensile strength of the overall thickness in the width direction (tensile strength) was set to 530 MPa. The acceptance criteria value for the yield strength of the overall thickness in the width direction (yield strength) was set to 450 MPa. The acceptance criteria value for the welded portion vE$_{-50}$ was set to 80 J. A steel pipe satisfying all of these acceptance criteria was determined as a steel plate excellent in strength and low temperature toughness.

[Table 1]

| Steel plate | C | Si | Mn | P | S | Al | Ti | O | Nb | Note |
|---|---|---|---|---|---|---|---|---|---|---|
| A1 | 0.05 | 0.20 | 1.6 | 0.009 | 0.0010 | 0.003 | 0.010 | 0.002 | 0.020 | Invention Example |
| A2 | 0.05 | 0.20 | 1.6 | 0.007 | 0.0010 | 0.003 | 0.010 | 0.002 | 0.010 | |
| A3 | 0.05 | 0.20 | 1.6 | 0.010 | 0.0020 | 0.003 | 0.010 | 0.002 | 0.020 | |
| A4 | 0.05 | 0.20 | 1.6 | 0.010 | 0.0008 | 0.003 | 0.010 | 0.002 | 0.030 | |
| A5 | 0.05 | 0.20 | 1.6 | 0.008 | 0.0005 | 0.003 | 0.010 | 0.002 | 0.030 | Reference Example |
| A6 | 0.05 | 0.20 | 1.6 | 0.010 | 0.0006 | 0.003 | 0.010 | 0.002 | 0.040 | Invention Example |
| A7 | 0.05 | 0.20 | 1.6 | 0.010 | 0.0008 | 0.003 | 0.010 | 0.002 | 0.050 | |
| A8 | 0.03 | 0.25 | 1.6 | 0.010 | 0.0010 | 0.003 | 0.010 | 0.002 | 0.030 | Reference Example |
| A9 | 0.10 | 0.10 | 1.1 | 0.010 | 0.0010 | 0.003 | 0.010 | 0.002 | 0.030 | |
| A10 | 0.05 | 0.01 | 1.6 | 0.010 | 0.0010 | 0.003 | 0.010 | 0.005 | 0.050 | |
| A11 | 0.05 | 0.50 | 1.6 | 0.010 | 0.0010 | 0.003 | 0.010 | 0.002 | 0.030 | Invention Example |
| A12 | 0.10 | 0.25 | 0.5 | 0.010 | 0.0005 | 0.003 | 0.010 | 0.002 | 0.020 | Reference Example |
| A13 | 0.03 | 0.25 | 2.5 | 0.010 | 0.0006 | 0.003 | 0.010 | 0.002 | 0.020 | Invention Example |
| A14 | 0.06 | 0.20 | 1.5 | 0.010 | 0.0008 | 0.001 | 0.010 | 0.005 | 0.030 | |
| A15 | 0.06 | 0.20 | 1.5 | 0.010 | 0.0003 | 0.040 | 0.010 | 0.002 | 0.030 | |
| A16 | 0.06 | 0.20 | 1.5 | 0.010 | 0.0010 | 0.003 | 0.003 | 0.002 | 0.040 | |
| A17 | 0.06 | 0.20 | 1.5 | 0.010 | 0.0010 | 0.003 | 0.030 | 0.002 | 0.030 | |
| A18 | 0.06 | 0.20 | 1.5 | 0.010 | 0.0010 | 0.003 | 0.010 | 0.002 | 0.001 | |
| A19 | 0.06 | 0.20 | 1.5 | 0.010 | 0.0010 | 0.003 | 0.010 | 0.002 | 0.200 | |
| A20 | 0.03 | 0.01 | 1.7 | 0.010 | 0.0010 | 0.003 | 0.010 | 0.002 | 0.003 | Reference Example |
| A21 | 0.05 | 0.02 | 1.6 | 0.010 | 0.0010 | 0.003 | 0.010 | 0.002 | 0.003 | Invention Example |
| A22 | 0.05 | 0.20 | 1.6 | 0.009 | 0.0008 | 0.003 | 0.010 | 0.002 | 0.020 | Reference Example |
| A23 | 0.05 | 0.20 | 1.6 | 0.009 | 0.0007 | 0.003 | 0.010 | 0.002 | 0.020 | Invention Example |
| A24 | 0.05 | 0.20 | 1.6 | 0.009 | 0.0005 | 0.003 | 0.010 | 0.002 | 0.020 | |
| A25 | 0.05 | 0.20 | 1.6 | 0.009 | 0.0009 | 0.003 | 0.010 | 0.002 | 0.020 | |
| A26 | 0.05 | 0.20 | 1.6 | 0.009 | 0.0004 | 0.003 | 0.010 | 0.002 | 0.020 | |

(continued)

| Steel plate | C | Si | Mn | P | S | Al | Ti | O | Nb | Note |
|---|---|---|---|---|---|---|---|---|---|---|
| B1 | <u>0.01</u> | 0.20 | 1.0 | 0.009 | 0.0010 | 0.003 | 0.010 | 0.002 | 0.020 | |
| B2 | <u>0.15</u> | 0.20 | 1.6 | 0.009 | 0.0010 | 0.003 | 0.010 | 0.002 | 0.020 | |
| B3 | 0.05 | <u>1.00</u> | 1.6 | 0.009 | 0.0010 | 0.003 | 0.010 | 0.002 | 0.020 | |
| B4 | 0.05 | 0.20 | <u>0.1</u> | 0.009 | 0.0010 | 0.003 | 0.010 | 0.002 | 0.020 | |
| B5 | 0.05 | 0.20 | <u>3.0</u> | 0.009 | 0.0010 | 0.003 | 0.010 | 0.002 | 0.020 | |
| B6 | 0.05 | 0.20 | 1.6 | 0.009 | 0.0010 | <u>0.05</u> | 0.010 | 0.002 | 0.020 | |
| B7 | 0.05 | 0.20 | 1.6 | 0.009 | 0.0010 | 0.003 | <u>0.001</u> | 0.002 | 0.020 | |
| B8 | 0.05 | 0.20 | 1.6 | 0.009 | 0.0010 | 0.003 | <u>0.050</u> | 0.002 | 0.020 | |
| B9 | 0.05 | 0.20 | 1.6 | 0.009 | 0.0010 | 0.003 | 0.010 | <u>0.009</u> | 0.020 | |
| B10 | 0.05 | 0.20 | 1.6 | 0.009 | 0.0010 | 0.003 | 0.010 | 0.002 | 0.020 | Comparative Example |
| B11 | 0.05 | 0.20 | 1.6 | 0.009 | 0.0010 | 0.003 | 0.010 | 0.002 | 0.020 | |
| B12 | 0.05 | 0.20 | 1.6 | 0.009 | 0.0010 | 0.003 | 0.010 | 0.002 | 0.020 | |
| B13 | 0.05 | 0.20 | 1.6 | 0.009 | 0.0010 | 0.003 | 0.010 | 0.002 | 0.020 | |
| B14 | 0.05 | 0.20 | 1.6 | 0.009 | 0.0010 | 0.003 | 0.010 | 0.002 | 0.020 | |
| B15 | 0.05 | 0.20 | 1.6 | 0.009 | 0.0010 | 0.003 | 0.010 | 0.002 | 0.020 | |
| B16 | 0.05 | 0.20 | 1.6 | 0.009 | 0.0010 | 0.003 | 0.010 | 0.002 | 0.020 | |
| B17 | 0.05 | 0.20 | 1.6 | 0.009 | 0.0010 | 0.003 | 0.010 | 0.002 | 0.020 | |
| B18 | 0.05 | 0.20 | 1.6 | 0.009 | 0.0010 | 0.003 | 0.010 | 0.002 | 0.020 | |
| B19 | 0.05 | 0.20 | 1.6 | 0.009 | 0.0010 | 0.003 | 0.010 | 0.002 | 0.020 | |

Underlined values are outside the specified ranges of the present invention.

[Table 2]

| Steel plate | N | B | Cu | Ni | Mo | Cr | V | Zr | Ta | Note |
|---|---|---|---|---|---|---|---|---|---|---|
| A1 | 0.003 | | 0.2 | 0.2 | 0.1 | | | | | |
| A2 | 0.003 | | 0.2 | 0.2 | | 0.1 | 0.01 | | | Invention Example |
| A3 | 0.003 | | 0.1 | 0.1 | 0.1 | 0.1 | | 0.0001 | 0.0001 | |
| A4 | 0.003 | 0.0008 | | | 0.2 | | 0.05 | | | |
| A5 | 0.003 | | | 0.2 | | 0.7 | 0.05 | | | Reference Example |
| A6 | 0.003 | | 0.1 | 0.1 | 0.2 | | | | | Invention Example |
| A7 | 0.003 | 0.0008 | 0.1 | 0.1 | | 0.1 | 0.06 | | | |
| A8 | 0.004 | | | | 0.7 | 0.3 | | | | |
| A9 | 0.002 | | | | 0.1 | | 0.10 | | | Reference Example |
| A10 | 0.003 | | 0.9 | | | | | | | |
| A11 | 0.002 | | | 0.9 | | | | | | Invention Example |
| A12 | 0.003 | 0.0003 | 0.3 | 0.2 | 0.3 | 0.1 | | | | Reference Example |

(continued)

| Steel plate | N | B | Cu | Ni | Mo | Cr | V | Zr | Ta | Note |
|---|---|---|---|---|---|---|---|---|---|---|
| A13 | 0.004 | | | | | | | | | Invention Example |
| A14 | 0.002 | | | 0.2 | | 0.2 | | | | |
| A15 | 0.003 | | | | 0.2 | 0.2 | | | | |
| A16 | 0.003 | | | | | 0.2 | | | | |
| A17 | 0.002 | | | 0.3 | | | | | | |
| A18 | 0.003 | | | | 0.2 | | | | | |
| A19 | 0.002 | | | | | 0.2 | | | | |
| A20 | 0.003 | | 0.1 | 0.1 | 0.5 | 0.4 | | | | Reference Example |
| A21 | 0.002 | | | | | | | | | Invention Example |
| A22 | 0.003 | 0.0050 | | | 0.2 | | | | | Reference Example |
| A23 | 0.002 | | | | | 0.3 | | | | Invention Example |
| A24 | 0.004 | | | | 0.3 | | | | | |
| A25 | 0.003 | | | | | 0.3 | | | | |
| A26 | 0.003 | | | | 0.1 | 0.2 | | | | |
| B1 | 0.003 | | 0.2 | 0.2 | 0.1 | | | | | Comparative Example |
| B2 | 0.003 | | 0.2 | 0.2 | 0.1 | | | | | |
| B3 | 0.003 | | 0.2 | 0.2 | 0.1 | | | | | |
| B4 | 0.003 | | 0.2 | 0.2 | 0.1 | | | | | |
| B5 | 0.003 | | 0.2 | 0.2 | 0.1 | | | | | |
| B6 | 0.003 | | 0.2 | 0.2 | 0.1 | | | | | |
| B7 | 0.003 | | 0.2 | 0.2 | 0.1 | | | | | |
| B8 | 0.003 | | 0.2 | 0.2 | 0.1 | | | | | |
| B9 | 0.003 | | 0.2 | 0.2 | 0.1 | | | | | |
| B10 | 0.003 | | 0.2 | 0.2 | 0.1 | | | | | |
| B11 | 0.003 | | 0.2 | 0.2 | 0.1 | | | | | |
| B12 | 0.003 | | 0.2 | 0.2 | 0.1 | | | | | |
| B13 | 0.003 | | 0.2 | 0.2 | 0.1 | | | | | |
| B14 | 0.003 | | 0.2 | 0.2 | 0.1 | | | | | |
| B15 | 0.003 | | 0.2 | 0.2 | 0.1 | | | | | |
| B16 | 0.002 | | | | 0.2 | 0.1 | | | | |
| B17 | 0.003 | | | | 0.2 | 0.2 | | | | |
| B18 | 0.004 | | | | 0.1 | 0.1 | | | | |
| B19 | 0.003 | 0.0030 | 0.3 | 0.3 | 0.4 | 0.4 | | | | |
| Underlined values are outside the specified ranges of the present invention. | | | | | | | | | | |

[Table 3]

| Steel plate | Mg | Ca | REM | Y | Hf | Re | w | Note |
|---|---|---|---|---|---|---|---|---|
| A1 | | 0.0020 | | | | | | Invention Example |
| A2 | 0.001 | 0.0015 | | | | | | Invention Example |
| A3 | | 0.0025 | | | | | 0.005 | Invention Example |
| A4 | | | 0.0005 | | | | | Invention Example |
| A5 | | | | 0.0005 | | | | Reference Example |
| A6 | | | | | 0.0005 | | | Invention Example |
| A7 | | | | | | 0.0005 | | Invention Example |
| A8 | | 0.0020 | | | | | | Reference Example |
| A9 | | 0.0020 | | | | | | Reference Example |
| A10 | | 0.0020 | | | | | | Reference Example |
| A11 | | 0.0020 | | | | | | Invention Example |
| A12 | | | | | | | | Reference Example |
| A13 | | | | | | | | Invention Example |
| A14 | | | | | | | | Invention Example |
| A15 | | | | | | | | Invention Example |
| A16 | | 0.0020 | | | | | | Invention Example |
| A17 | | 0.0020 | | | | | | Invention Example |
| A18 | | 0.0020 | | | | | | Invention Example |
| A19 | | 0.0020 | | | | | | Invention Example |
| A20 | | 0.0020 | | | | | | Reference Example |
| A21 | | 0.0020 | | | | | | Invention Example |
| A22 | | 0.0020 | | | | | | Reference Example |
| A23 | | | | | | | | Invention Example |
| A24 | | | | | | | | Invention Example |
| A25 | | | | | | | | Invention Example |
| A26 | | | | | | | | Invention Example |

(continued)

| Steel plate | Mg | Ca | REM | Y | Hf | Re | w | Note |
|---|---|---|---|---|---|---|---|---|
| B1 | | 0.0020 | | | | | | |
| B2 | | 0.0020 | | | | | | |
| B3 | | 0.0020 | | | | | | |
| B4 | | 0.0020 | | | | | | |
| B5 | | 0.0020 | | | | | | |
| B6 | | 0.0020 | | | | | | |
| B7 | | 0.0020 | | | | | | |
| B8 | | 0.0020 | | | | | | |
| B9 | | 0.0020 | | | | | | |
| B10 | | 0.0020 | | | | | | Comparative Example |
| B11 | | 0.0020 | | | | | | |
| B12 | | 0.0020 | | | | | | |
| B13 | | 0.0020 | | | | | | |
| B14 | | 0.0020 | | | | | | |
| B15 | | 0.0020 | | | | | | |
| B16 | | 0.0020 | | | | | | |
| B17 | | 0.0020 | | | | | | |
| B18 | | 0.0020 | | | | | | |
| B19 | | 0.0020 | | | | | | |
| Underlined values are outside the specified ranges of the present invention. | | | | | | | | |

[Table 4]

| Steel plate | Ceq | Pcm | Ac3 | Ar3 | β | Vc90 | Ms | Note |
|---|---|---|---|---|---|---|---|---|
| A1 | 0.36 | 0.157 | 892 | 751 | 2.10 | 131 | 485 | Invention Example |
| A2 | 0.37 | 0.156 | 889 | 759 | 2.10 | 131 | 484 | |
| A3 | 0.37 | 0.155 | 896 | 759 | 2.09 | 134 | 486 | |
| A4 | 0.37 | 0.159 | 913 | 758 | 2.12 | 127 | 489 | |
| A5 | 0.48 | 0.180 | 894 | 754 | 2.57 | 58 | 478 | Reference Example |
| A6 | 0.37 | 0.157 | 900 | 751 | 2.11 | 129 | 487 | Invention Example |
| A7 | 0.36 | 0.158 | 901 | 769 | 2.11 | 129 | 486 | |
| A8 | 0.50 | 0.180 | 933 | 720 | 2.72 | 45 | 489 | Reference Example |
| A9 | 0.32 | 0.175 | 895 | 791 | 1.71 | 256 | 486 | |
| A10 | 0.38 | 0.175 | 871 | 756 | 2.14 | 121 | 480 | |
| A11 | 0.38 | 0.162 | 889 | 725 | 2.34 | 86 | 476 | Invention Example |
| A12 | 0.30 | 0.178 | 901 | 804 | 1.48 | 383 | 489 | Reference Example |

(continued)

| Steel plate | Ceq | Pcm | Ac3 | Ar3 | β | Vc90 | Ms | Note |
|---|---|---|---|---|---|---|---|---|
| A13 | 0.45 | 0.163 | 890 | 708 | 2.68 | 48 | 476 | Invention Example |
| A14 | 0.36 | 0.155 | 887 | 765 | 1.99 | 157 | 484 | |
| A15 | 0.39 | 0.165 | 908 | 760 | 2.10 | 130 | 485 | |
| A16 | 0.35 | 0.152 | 892 | 776 | 1.90 | 183 | 486 | |
| A17 | 0.33 | 0.147 | 889 | 763 | 1.88 | 192 | 485 | |
| A18 | 0.35 | 0.155 | 902 | 763 | 1.94 | 171 | 488 | |
| A19 | 0.35 | 0.152 | 890 | 776 | 1.90 | 183 | 486 | |
| A20 | 0.51 | 0.175 | 906 | 719 | 2.70 | 47 | 485 | Reference Example |
| A21 | 0.32 | 0.131 | 887 | 774 | 1.74 | 241 | 492 | Invention Example |
| A22 | 0.36 | 0.175 | 921 | 758 | 2.02 | 151 | 489 | Reference Example |
| A23 | 0.38 | 0.152 | 895 | 770 | 2.06 | 141 | 486 | Invention Example |
| A24 | 0.38 | 0.157 | 908 | 750 | 2.12 | 127 | 489 | |
| A25 | 0.38 | 0.152 | 895 | 770 | 2.06 | 141 | 486 | |
| A26 | 0.38 | 0.153 | 899 | 763 | 2.08 | 136 | 487 | |
| B1 | <u>0.22</u> | <u>0.087</u> | 921 | 815 | 1.39 | 446 | 512 | Comparative Example |
| B2 | 0.46 | <u>0.257</u> | 848 | 723 | 2.37 | 82 | 452 | |
| B3 | 0.36 | <u>0.183</u> | 937 | 754 | 2.42 | 76 | 479 | |
| B4 | <u>0.11</u> | <u>0.082</u> | 921 | 871 | 0.60 | 1753 | 519 | |
| B5 | <u>0.60</u> | <u>0.227</u> | 864 | 640 | 3.50 | 12 | 452 | |
| B6 | 0.36 | 0.157 | 901 | 752 | 2.10 | 131 | 485 | |
| B7 | 0.36 | 0.157 | 891 | 752 | 2.10 | 131 | 485 | |
| B8 | 0.36 | 0.157 | 897 | 752 | 2.10 | 131 | 485 | |
| B9 | 0.36 | 0.157 | 892 | 753 | 2.10 | 131 | 485 | |
| B10 | 0.36 | 0.157 | 892 | 754 | 2.10 | 131 | 485 | |
| B11 | 0.36 | 0.157 | 892 | 754 | 2.10 | 131 | 485 | |
| B12 | 0.36 | 0.157 | 892 | 754 | 2.10 | 131 | 485 | |
| B13 | 0.36 | 0.157 | 892 | 751 | 2.10 | 131 | 485 | |
| B14 | 0.36 | 0.157 | 892 | 750 | 2.10 | 131 | 485 | |
| B15 | 0.36 | 0.157 | 892 | 750 | 2.10 | 131 | 485 | |
| B16 | 0.38 | 0.155 | 904 | 757 | 2.10 | 131 | 488 | |
| B17 | 0.40 | 0.160 | 903 | 755 | 2.18 | 114 | 486 | |
| B18 | 0.36 | 0.148 | 900 | 765 | 2.00 | 156 | 488 | |
| B19 | 0.52 | <u>0.218</u> | 907 | 714 | 2.81 | 39 | 475 | |

Underlined values are outside the specified ranges of the present invention.

[Table 5]

| Steel plate | Hot rolling | | | | Note |
|---|---|---|---|---|---|
| | Heating temperature (°C) | Rolling reduction ratio | Plate thickness (mm) | Finishing temperature (°C) | |
| A1 | 1100 | 3 | 30 | 751 | Invention Example |
| A2 | 1100 | 3 | 35 | 759 | |
| A3 | 1100 | 3 | 34 | 759 | |
| A4 | 1100 | 3 | 30 | 758 | |
| A5 | 1100 | 3 | 33 | 754 | Reference Example |
| A6 | 1100 | 3 | 31 | 751 | Invention Example |
| A7 | 1100 | 3 | 40 | 769 | |
| A8 | 1100 | 3 | 30 | 720 | Reference Example |
| A9 | 1100 | 3 | 30 | 791 | |
| A10 | 1100 | 3 | 30 | 756 | |
| A11 | 1100 | 3 | 30 | 725 | Invention Example |
| A12 | 1100 | 3 | 30 | 804 | Reference Example |
| A13 | 1100 | 3 | 30 | 708 | Invention Example |
| A14 | 1100 | 3 | 30 | 765 | |
| A15 | 1100 | 3 | 30 | 760 | |
| A16 | 1200 | 3 | 30 | 776 | |
| A17 | 1100 | 3 | 30 | 763 | |
| A18 | 1200 | 3 | 30 | 763 | |
| A19 | 1100 | 3 | 30 | 776 | |
| A20 | 1100 | 3 | 30 | 719 | Reference Example |
| A21 | 1100 | 3 | 30 | 774 | Invention Example |
| A22 | 1100 | 3 | 30 | 758 | Reference Example |
| A23 | 1100 | 3 | 30 | 770 | Invention Example |
| A24 | 1100 | 3 | 30 | 750 | |
| A25 | 1100 | 3 | 30 | 770 | |
| A26 | 1100 | 3 | 30 | 793 | |

(continued)

| Steel plate | Hot rolling | | | | Note |
|---|---|---|---|---|---|
| | Heating temperature (°C) | Rolling reduction ratio | Plate thickness (mm) | Finishing temperature (°C) | |
| B1 | 1100 | 3 | 40 | 815 | Comparative Example |
| B2 | 1100 | 3 | 39 | 723 | |
| B3 | 1100 | 3 | 39 | 754 | |
| B4 | 1100 | 3 | 30 | 871 | |
| B5 | 1100 | 3 | 33 | 640 | |
| B6 | 1100 | 3 | 32 | 752 | |
| B7 | 1100 | 3 | 31 | 752 | |
| B8 | 1100 | 3 | 32 | 752 | |
| B9 | 1100 | 3 | 36 | 753 | |
| B10 | <u>892</u> | 3 | 38 | 754 | |
| B11 | 1100 | <u>1.5</u> | 39 | 754 | |
| B12 | 1100 | 3 | 39 | <u>740</u> | |
| B13 | <u>1300</u> | 3 | 30 | 751 | |
| B14 | 1100 | 3 | 26 | 750 | |
| B15 | 1100 | 3 | 26 | 754 | |
| B16 | 1100 | 3 | 30 | 751 | |
| B17 | 1100 | 3 | 30 | 751 | |
| B18 | 1100 | 3 | 30 | <u>751</u> | |
| B19 | 1100 | 3 | 30 | 751 | |
| Underlined values are inappropriate values. | | | | | |

[Table 6]

| Steel plate | Surface layer | | | | 1/4t portion | | | 1/2t portion | Note |
|---|---|---|---|---|---|---|---|---|---|
| | Cooling rate (°C/s) | Cooling step temperature (°C) | Reheating rate (°C/s) | Reheating temperature (°C) | Retention temperature (°C) | Retention time (sec) | Cooling rate (°C/s) | Cooling rate (°C/s) | |
| A1 | 400 | 400 | 64 | 560 | 700 | 1.0 | 25 | 20 | Invention Example |
| A2 | 400 | 400 | 64 | 560 | 680 | 1.3 | 23 | 18 | |
| A3 | 400 | 400 | 64 | 560 | 720 | 1.3 | 24 | 19 | |
| A4 | 400 | 400 | 64 | 560 | 730 | 1.0 | 25 | 20 | |
| A5 | 400 | 450 | 52 | 580 | 700 | 1.2 | 24 | 19 | Reference Ex. |
| A6 | 400 | 400 | 64 | 560 | 690 | 1.0 | 25 | 20 | Invention Example |
| A7 | 400 | 400 | 64 | 560 | 680 | 2.0 | 21 | 16 | |
| A8 | 200 | 490 | 54 | 600 | 700 | 1.0 | 25 | 20 | Reference Example |
| A9 | 500 | 300 | 100 | 600 | 700 | 1.0 | 25 | 20 | |
| A10 | 400 | 400 | 64 | 560 | 680 | 1.0 | 25 | 20 | |
| A11 | 400 | 400 | 64 | 560 | 700 | 1.0 | 25 | 20 | Invention Example |
| A12 | 500 | 400 | 64 | 560 | 690 | 1.0 | 25 | 20 | Reference Ex. |
| A13 | 200 | 450 | 52 | 580 | 700 | 1.0 | 25 | 20 | Invention Example |
| A14 | 400 | 400 | 64 | 560 | 720 | 1.0 | 25 | 20 | |
| A15 | 400 | 400 | 64 | 560 | 700 | 1.0 | 25 | 20 | |
| A16 | 400 | 400 | 64 | 560 | 710 | 1.0 | 25 | 20 | |
| A17 | 400 | 400 | 64 | 560 | 700 | 1.0 | 25 | 20 | |
| A18 | 400 | 400 | 64 | 560 | 730 | 1.0 | 25 | 20 | |
| A19 | 400 | 400 | 64 | 560 | 700 | 1.0 | 25 | 20 | |
| A20 | 200 | 490 | 55 | 600 | 690 | 1.0 | 25 | 20 | Reference Ex. |

(continued)

| Steel plate | Surface layer | | | 1/4t portion | | | 1/2t portion | Note |
|---|---|---|---|---|---|---|---|---|
| | Cooling rate (°C/s) | Cooling step temperature (°C) | Reheating rate (°C/s) | Reheating temperature (°C) | Retention temperature (°C) | Retention time (sec) | Cooling rate (°C/s) | Cooling rate (°C/s) |
| A21 | 400 | 300 | 120 | 600 | 700 | 1.0 | 25 | 20 | Invention Example |
| A22 | 400 | 400 | 64 | 560 | 680 | 1.0 | 25 | 20 | Reference Ex. |
| A23 | 400 | 400 | 64 | 560 | 700 | 1.0 | 25 | 20 | |
| A24 | 400 | 400 | 64 | 560 | 670 | 1.0 | 25 | 20 | Invention Example |
| A25 | 400 | 400 | 64 | 560 | 700 | 1.0 | 25 | 20 | |
| A26 | 400 | 400 | 64 | 560 | 700 | 1.0 | 25 | 20 | |

(continued)

| Steel plate | Surface layer | | | | 1/4t portion | | | 1/2t portion | Note |
|---|---|---|---|---|---|---|---|---|---|
| | Cooling rate (°C/s) | Cooling step temperature (°C) | Reheating rate (°C/s) | Reheating temperature (°C) | Retention temperature (°C) | Retention time (sec) | Cooling rate (°C/s) | Cooling rate (°C/s) | |
| B1 | 400 | 400 | 64 | 560 | 680 | 2.0 | 21 | 16 | Comparative Example |
| B2 | 400 | 400 | 64 | 560 | 670 | 1.8 | 22 | 17 | |
| B3 | 400 | 400 | 64 | 560 | 700 | 1.7 | 21 | 16 | |
| B4 | 400 | 400 | 64 | 560 | 720 | 1.1 | 21 | 16 | |
| B5 | 400 | 400 | 64 | 560 | 690 | 1.2 | 25 | 20 | |
| B6 | 400 | 400 | 64 | 560 | 680 | 1.2 | 25 | 20 | |
| B7 | 400 | 400 | 64 | 560 | 700 | 1.0 | 25 | 20 | |
| B8 | 400 | 400 | 64 | 560 | 710 | 1.0 | 25 | 20 | |
| B9 | 400 | 400 | 64 | 560 | 720 | 1.7 | 23 | 18 | |
| B10 | 400 | 400 | 64 | 560 | 680 | 1.8 | 21 | 16 | |
| B11 | 400 | 400 | 64 | 560 | 700 | 2.0 | 21 | 16 | |
| B12 | 400 | 400 | 64 | 560 | 700 | 1.9 | 21 | 16 | |
| B13 | 400 | 400 | 64 | 560 | 690 | 1.0 | 27 | 22 | |
| B14 | 400 | 50 | 80 | _450_ | 700 | 1.0 | 27 | 22 | |
| B15 | 400 | 300 | 40 | _400_ | _-_ | _0.0_ | 21 | 16 | |
| B16 | 400 | 400 | 64 | 560 | _-_ | _0.0_ | 25 | 20 | |
| B17 | 400 | 400 | 64 | 560 | _630_ | 1.0 | 25 | 20 | |
| B18 | 400 | 400 | 64 | 560 | _790_ | 1.0 | 25 | 20 | |
| B19 | 400 | 400 | 64 | 560 | 700 | 1.1 | 25 | 20 | |
| Underlined values are inappropriate values. | | | | | | | | | |

[Table 7]

| Steel plate | Surface layer | | | 1/4t portion | | | 1/2t portion | | | Hardness difference (Hv) | Effective grainsize (μm) | Note |
|---|---|---|---|---|---|---|---|---|---|---|---|---|
| | Structure | PF fraction (area%) | Hardness (Hv) | Structure | PF fraction (area%) | Hardness (Hv) | Structure | PF fraction (area%) | Hardness (Hv) | | | |
| A1 | PF + TM | 30 | 205 | PF+B | 25 | 195 | PF+B | 25 | 195 | 10 | 12 | Invention Example |
| A2 | PF + TM | 30 | 215 | PF+B | 30 | 190 | PF+B | 30 | 190 | 25 | 15 | |
| A3 | PF + TM | 30 | 220 | PF+B | 30 | 190 | PF+B | 30 | 190 | 30 | 13 | |
| A4 | PF + TM | 35 | 215 | PF+B | 30 | 190 | PF+B | 30 | 190 | 25 | 10 | |
| A5 | PF + TM | 10 | 240 | PF+B | 10 | 210 | PF+B | 10 | 210 | 30 | 11 | Reference Example |
| A6 | PF + TM | 30 | 220 | PF+B | 30 | 190 | PF+B | 30 | 190 | 30 | 9 | Invention Example |
| A7 | PF + TM | 35 | 215 | PF+B | 30 | 190 | PF+B | 30 | 190 | 25 | 14 | |
| A8 | PF+B+AF | 10 | 230 | PF+B+AF | 15 | 205 | PF + B + AF | 15 | 205 | 25 | 12 | Reference Example |
| A9 | PF + TM | 40 | 210 | PF+B | 30 | 190 | PF+B | 30 | 190 | 20 | 12 | |
| A10 | PF + TM | 30 | 220 | PF+B | 25 | 195 | PF+B | 25 | 195 | 25 | 12 | |
| A11 | PF + TM | 15 | 235 | PF+B | 15 | 205 | PF+B | 15 | 205 | 30 | 12 | Invention Example |
| A12 | PF + TM | 45 | 205 | PF+B | 30 | 190 | PF+B | 30 | 190 | 15 | 12 | Reference Example |
| A13 | PF + TM | 10 | 240 | PF+B | 10 | 210 | PF+B | 10 | 210 | 30 | 12 | Invention Example |
| A14 | PF + TM | 30 | 220 | PF+B | 25 | 195 | PF+B | 25 | 195 | 25 | 12 | |
| A15 | PF + TM | 30 | 220 | PF+B | 25 | 195 | PF+B | 25 | 195 | 25 | 12 | |
| A16 | PF + TM | 35 | 215 | PF+B | 25 | 195 | PF+B | 25 | 195 | 20 | 15 | |
| A17 | PF + TM | 40 | 210 | PF+B | 25 | 195 | PF+B | 25 | 195 | 15 | 12 | |
| A18 | PF + TM | 35 | 215 | PF+B | 25 | 195 | PF+B | 25 | 195 | 20 | 15 | |
| A19 | PF + TM | 35 | 215 | PF+B | 25 | 195 | PF+B | 25 | 195 | 20 | 12 | |

EP 3 686 303 B1

32

(continued)

| Steel plate | Surface layer | | | 1/4t portion | | | 1/2t portion | | | Hardness difference (Hv) | Effective grain size (μm) | Note |
|---|---|---|---|---|---|---|---|---|---|---|---|---|
| | Structure | PF fraction (area%) | Hardness (Hv) | Structure | PF fraction (area%) | Hardness (Hv) | Structure | PF fraction (area%) | Hardness (Hv) | | | |
| A20 | PF+B+AF | 10 | 240 | PF+B+AF | 10 | 210 | PF+B+AF | 10 | 210 | 30 | 14 | Reference Example |
| A21 | PF + TM | 45 | 205 | PF+B | 30 | 190 | PF+B | 30 | 190 | 15 | 13 | Invention Example |
| A22 | PF+B | 30 | 220 | PF+B | 30 | 190 | PF+B | 30 | 190 | 30 | 15 | Reference Example |
| A23 | PF + AF | 30 | 220 | PF+B | 30 | 190 | PF+B | 30 | 190 | 30 | 15 | Invention Example |
| A24 | PF + TM | 25 | 225 | PF + AF | 25 | 195 | PF+B | 25 | 195 | 30 | 15 | |
| A25 | PF + TM | 30 | 220 | PF+B | 30 | 190 | PF + AF | 30 | 190 | 30 | 15 | |
| A26 | PF + TM | 5 | 240 | PF+B | 10 | 210 | PF+B | 10 | 210 | 30 | 20 | |

| Steel plate | Surface layer | | | 1/4t portion | | | 1/2t portion | | | Hardness difference (Hv) | Effective grainsize (μm) | Note |
|---|---|---|---|---|---|---|---|---|---|---|---|---|
| | Structure | PF fraction (area%) | Hardness (Hv) | Structure | PF fraction (area%) | Hardness (Hv) | Structure | PF fraction (area%) | Hardness (Hv) | | | |
| B1 | PF + TM | 60 | 190 | PF+B | 50 | 170 | PF+B | 40 | 180 | 10 | 10 | |
| B2 | PF + TM | 0 | 255 | PF+B | 0 | 220 | PF+B | 0 | 220 | 35 | 20 | |
| B3 | PF + TM | 35 | 215 | PF+B+M | 35 | 185 | PF+B+M | 30 | 190 | 25 | 14 | |
| B4 | PF + TM | 70 | 180 | PF+B | 60 | 160 | PF+B | 50 | 170 | 10 | 10 | |
| B5 | PF + TM | 0 | 255 | PF+B | 0 | 220 | PF+B | 0 | 220 | 35 | 20 | |
| B6 | PF + TM | 30 | 220 | PF+B+M | 30 | 190 | PF+B+M | 25 | 195 | 25 | 14 | |
| B7 | PF + TM | 30 | 220 | PF+B | 30 | 190 | PF+B | 30 | 190 | 30 | 12 | |
| B8 | PF + TM | 30 | 220 | PF+B | 30 | 190 | PF+B | 30 | 190 | 30 | 15 | |
| B9 | PF + TM | 30 | 220 | PF+B | 30 | 190 | PF+B | 30 | 190 | 30 | 13 | |
| B10 | PF + TM | 60 | 190 | PF+B | 50 | 170 | PF+B | 40 | 180 | 10 | 10 | Comparative Example |
| B11 | PF + TM | 35 | 215 | PF+B | 35 | 185 | PF+B | 30 | 190 | 25 | 25 | |
| B12 | PF + TM + DF | 70 | 185 | PF+B | 60 | 160 | PF+B | 50 | 170 | 15 | 15 | |
| B13 | PF + TM | 30 | 220 | PF+B | 25 | 195 | PF+B | 25 | 195 | 25 | 30 | |
| B14 | PF+M | 5 | 250 | PF+B+M | 10 | 210 | PF+B+M | 10 | 210 | 40 | 20 | |
| B15 | PF+M | 5 | 250 | PF+B+M | 10 | 210 | PF+B+M | 10 | 210 | 40 | 20 | |
| B16 | PF + TM | 30 | 220 | PF+B | 5 | 215 | PF+B | 5 | 215 | 5 | 15 | |
| B17 | PF + TM | 30 | 220 | PF+B | 5 | 215 | PF+B | 5 | 215 | 5 | 13 | |
| B18 | PF + TM | 30 | 220 | PF+B | 5 | 215 | PF+B | 5 | 215 | 5 | 10 | |
| B19 | PF + TM | 0 | 255 | PF+B | 0 | 220 | PF+B | 0 | 220 | 35 | 20 | |

Underlined values are outside the specified ranges of the present invention.

EP 3 686 303 B1

[Table 8]

| Steel plate | $vE_{-60}$ (J) | DWTT (%) | TS (MPa) | Note |
|---|---|---|---|---|
| A1 | 220 | 95 | 619 | Invention Example |
| A2 | 200 | 90 | 619 | |
| A3 | 220 | 90 | 624 | |
| A4 | 240 | 90 | 619 | |
| A5 | 230 | 95 | 686 | Reference Example |
| A6 | 220 | 95 | 624 | Invention Example |
| A7 | 230 | 93 | 619 | |
| A8 | 300 | 100 | 665 | Reference Example |
| A9 | 200 | 90 | 613 | |
| A10 | 210 | 95 | 634 | |
| A11 | 220 | 95 | 671 | Invention Example |
| A12 | 230 | 93 | 608 | Reference Example |
| A13 | 250 | 95 | 686 | Invention Example |
| A14 | 220 | 93 | 634 | |
| A15 | 220 | 93 | 634 | |
| A16 | 210 | 93 | 629 | |
| A17 | 210 | 95 | 624 | |
| A18 | 210 | 95 | 629 | |
| A19 | 220 | 95 | 629 | |
| A20 | 300 | 95 | 686 | Reference Example |
| A21 | 220 | 90 | 608 | Invention Example |
| A22 | 225 | 95 | 624 | Reference Example |
| A23 | 220 | 90 | 624 | Invention Example |
| A24 | 210 | 95 | 639 | |
| A25 | 210 | 90 | 624 | |
| A26 | 210 | 95 | 681 | |

(continued)

| Steel plate | vE$_{-60}$ (J) | DWTT (%) | TS (MPa) | Note |
|---|---|---|---|---|
| B1 | <u>150</u> | 95 | 554 | |
| B2 | <u>50</u> | <u>65</u> | 723 | |
| B3 | <u>50</u> | <u>80</u> | 613 | |
| B4 | <u>150</u> | 95 | 530 | |
| B5 | <u>60</u> | <u>70</u> | 723 | |
| B6 | <u>50</u> | <u>70</u> | 629 | |
| B7 | 210 | 95 | 624 | |
| B8 | <u>30</u> | <u>50</u> | 624 | |
| B9 | <u>50</u> | <u>40</u> | 624 | |
| B10 | <u>150</u> | 95 | 555 | Comparative Example |
| B11 | <u>90</u> | <u>70</u> | 613 | |
| B12 | <u>100</u> | 95 | 535 | |
| B13 | <u>130</u> | <u>75</u> | 634 | |
| B14 | <u>90</u> | <u>75</u> | 697 | |
| B15 | <u>90</u> | <u>75</u> | 697 | |
| B16 | 210 | <u>80</u> | 683 | |
| B17 | 220 | <u>80</u> | 688 | |
| B18 | 200 | <u>80</u> | 685 | |
| B19 | <u>130</u> | <u>75</u> | 723 | |
| Underlined values are outside the acceptable ranges. | | | | |

[Table 9]

| Steel pipe | Base material vE$_{-60}$ (J) | DWTT (%) | YS (MPa) | TS (MPa) | Welded portion vE$_{-60}$ (J) | Note |
|---|---|---|---|---|---|---|
| A1 | 220 | 90 | 524 | 625 | 115 | Invention Example |
| A2 | 200 | 85 | 500 | 625 | 130 | |
| A3 | 220 | 85 | 504 | 630 | 123 | |
| A4 | 240 | 85 | 500 | 625 | 104 | |
| A5 | 230 | 90 | 554 | 693 | 105 | Reference Example |
| A6 | 220 | 90 | 504 | 630 | 110 | Invention Example |
| A7 | 230 | 88 | 500 | 625 | 120 | |
| A8 | 300 | 100 | 538 | 672 | 100 | Reference Example |
| A9 | 200 | 85 | 496 | 620 | 80 | |
| A10 | 210 | 90 | 512 | 641 | 100 | |
| A11 | 220 | 90 | 542 | 677 | 110 | Invention Example |
| A12 | 230 | 88 | 491 | 614 | 110 | Reference Example |

(continued)

| Steel pipe | Base material vE-$_{60}$ (J) | DWTT (%) | YS (MPa) | TS (MPa) | Welded portion vE-$_{60}$ (J) | Note |
|---|---|---|---|---|---|---|
| A13 | 250 | 90 | 554 | 693 | 150 | Invention Example |
| A14 | 220 | 88 | 512 | 641 | 100 | |
| A15 | 220 | 88 | 512 | 641 | 105 | |
| A16 | 210 | 88 | 508 | 635 | 110 | |
| A17 | 210 | 90 | 504 | 630 | 110 | |
| A18 | 210 | 90 | 508 | 635 | 110 | |
| A19 | 220 | 90 | 508 | 635 | 110 | |
| A20 | 300 | 90 | 554 | 693 | 150 | Reference Example |
| A21 | 220 | 85 | 491 | 614 | 150 | Invention Example |
| A22 | 225 | 90 | 504 | 630 | 110 | Reference Example |
| A23 | 220 | 85 | 504 | 630 | 100 | Invention Example |
| A24 | 210 | 90 | 517 | 646 | 110 | |
| A25 | 210 | 85 | 504 | 630 | 100 | |
| A26 | 210 | 90 | 550 | 688 | 90 | |
| B1 | 140 | 90 | 448 | 560 | 150 | Comparative Example |
| B2 | 40 | 60 | 584 | 730 | 30 | |
| B3 | 40 | 75 | 496 | 620 | 45 | |
| B4 | 150 | 90 | 428 | 536 | 100 | |
| B5 | 50 | 65 | 584 | 730 | 45 | |
| B6 | 40 | 65 | 508 | 635 | 40 | |
| B7 | 210 | 90 | 504 | 630 | 70 | |
| B8 | 50 | 45 | 504 | 630 | 30 | |
| B9 | 60 | 35 | 504 | 630 | 35 | |
| B10 | 140 | 90 | 449 | 561 | 90 | |
| B11 | 90 | 65 | 496 | 620 | 110 | |
| B12 | 100 | 90 | 433 | 541 | 95 | |
| B13 | 130 | 70 | 512 | 641 | 100 | |
| B14 | 80 | 70 | 563 | 704 | 85 | |
| B15 | 80 | 70 | 563 | 704 | 90 | |
| B16 | 205 | 75 | 552 | 690 | 95 | |
| B17 | 210 | 75 | 556 | 695 | 100 | |
| B18 | 200 | 75 | 554 | 692 | 110 | |
| B19 | 130 | 70 | 584 | 730 | 55 | |
| Underlined values are outside the acceptable ranges. | | | | | | |

It can be seen from the invention examples and comparative examples disclosed in the tables that, the steel pipes according to the present invention are superior to the steel pipes in the comparative examples in base material toughness, toughness of welded portions, yield stress, and tensile strength in a very low temperature environment.

[Industrial Applicability]

As described above, according to the present invention, it is possible to provide a steel pipe for a pipeline laid in a very low temperature environment and a steel plate that is a material thereof. Therefore, the present invention has high applicability in the steel plate manufacturing industry and the energy industry.

[Brief Description of the Reference Symbols]

1    steel pipe
2    steel plate
3    welded portion

**Claims**

**1.**   A steel pipe comprising:

a base material portion made of a cylindrical steel plate; and
a welded portion which is provided at a seam portion of the steel plate and extends in a longitudinal direction of the steel plate,
wherein a chemical composition of the steel plate contains, by unit mass%,

C: 0.030% to 0.100%,
Si: 0.01% to 0.50%,
Mn: 0.50% to 2.50%,
P: 0.050% or less,
S: 0.005% or less,
Al: 0.040% or less,
Ti: 0.003% to 0.030%,
O: 0.005% or less,
Nb: 0.0001% to 0.20%,
N: 0% to 0.008%,
Cu: 0% to 1.00%,
Ni: 0% to 1.00%,
Mo: 0% to 1.00%,
Cr: 0% to 1.00%,
V: 0% to 0.10%,
B: 0% to 0.005%,
Zr: 0% to 0.050%,
Ta: 0% to 0.050%,
Mg: 0% to 0.010%,
Ca: 0% to 0.005%,
REM: 0% to 0.005%,
Y: 0% to 0.005%,
Hf: 0% to 0.005%,
Re: 0% to 0.005%,
W: 0% to 0.005%, and
a remainder containing Fe and impurities,

Ceq defined by Formula 1 is 0.30 to 0.53 and Pcm defined by Formula 2 is 0.100 to 0.165,
a microstructure of a surface layer which is a region from a surface of the steel plate to a depth of 1 mm contains polygonal ferrite in an area ratio of 0% to 50%, and a remainder containing one or more of bainite, acicular ferrite, and tempered martensite,
a microstructure of a 1/4t portion of the steel plate contains the polygonal ferrite in an area ratio of 10% to 40%, and a remainder containing one or both of the bainite and the acicular ferrite,
a microstructure of a 1/2t portion of the steel plate contains the polygonal ferrite in an area ratio of 5% to 30%, and a remainder containing one or both of the bainite and the acicular ferrite,
an effective grain size of a through-thickness surface of the steel plate is 20 $\mu$m or less,
in the through-thickness surface of the steel plate, a hardness distribution in a plate thickness direction satisfies Formula 3, and a difference between a hardness of the surface layer and a hardness of the 1/2t portion is 30 Hv or less,

$$Ceq = [C] + [Mn] / 6 + ([Ni] + [Cu]) / 15 + ([Cr] + [Mo] + [V]) / 5 \ldots \text{Formula 1}$$

$$Pcm = [C] + [Si] / 30 + ([Mn] + [Cu] + [Cr]) / 20 + [Ni] / 60 + [Mo] / 15 + [V] /$$

$$10 + 5 \times [B] \ldots \text{Formula 2}$$

the hardness of the surface layer $\geq$ the hardness of the 1/4t portion $\geq$ the hardness of the 1/2t portion...Formula 3
where, in Formula 1 and Formula 2, an element symbol enclosed in parentheses indicates an amount of a corresponding element in the chemical composition of the steel plate by unit mass%,
the term "t" is a plate thickness of the steel pipe,
the 1/4t portion is a region having a thickness of 2 mm with a position at a depth of 1/4 of the plate thickness t of the steel plate from the surface of the steel plate as a central plane,
the 1/2t portion is a region having a thickness of 2 mm with a position at a depth of 1/2 of the plate thickness t of the steel plate from the surface of the steel plate as a central plane,
the microstructure of the surface layer, the microstructure of the 1/4t portion, and the microstructure of the 1/2t portion are identified by the method described in the description,
the effective grain size is identified by the method described in the description,
the hardness distribution is identified by the method described in the description, and
the through-thickness surface is a cut section parallel to the longitudinal direction of the steel pipe and perpendicular to the surface of the steel plate.

2. The steel pipe according to claim 1,
wherein the chemical composition of the steel plate contains, by unit mass%, N: 0.001% to 0.008%.

3. The steel pipe according to claim 1 or 2, wherein the chemical composition of the steel plate contains one or more selected from the group consisting of, by unit mass%,

Cu: 0.05% to 1.00%,
Ni: 0.05% to 1.00%,
Mo: 0.01% to 1.00%,
Cr: 0.01% to 1.00%,
V: 0.01% to 0.10%,
B: 0.0001% to 0.005%,
Zr: 0.0001% to 0.050%,
Ta: 0.0001% to 0.050%,
Mg: 0.0001% to 0.010%,
Ca: 0.0001% to 0.005%,
REM: 0.0001% to 0.005%,
Y: 0.0001% to 0.005%,
Hf: 0.0001% to 0.005%,
Re: 0.0001% to 0.005%, and
W: 0.0001% to 0.005%.

4. The steel pipe according to any one of claims 1 to 3,
wherein the chemical composition of the steel plate contains, by unit mass%, Al: 0.005% or less.

5. The steel pipe according to any one of claims 1 to 4,
wherein the microstructure of the surface layer of the steel plate contains the tempered martensite in an area ratio of 1% or more.

6. The steel pipe according to any one of claims 1 to 5,
   wherein the Pcm is 0.100 to 0.140.

7. The steel pipe according to any one of claims 1 to 6,
   wherein the steel plate has a plate thickness of 25.4 mm or more, and the Ceq is 0.35 to 0.53.

8. A steel plate which is the steel plate of the steel pipe according to any one of claims 1 to 7.

**Patentansprüche**

1. Stahlrohr, das aufweist:

   einen Grundmaterialabschnitt, der aus einem zylindrischen Stahlblech hergestellt ist; und
   einen Schweißabschnitt, der an einem Nahtabschnitt des Stahlblechs vorgesehen ist und sich in einer Längsrichtung des Stahlblechs erstreckt,
   wobei eine chemische Zusammensetzung des Stahlblechs in Masse-% enthält:

   0,030 % bis 0,100 % C,
   0,01 % bis 0,50 % Si,
   0,50 % bis 2,50 % Mn,
   höchstens 0,050 % P,
   höchstens 0,005 % S,
   höchstens 0,040 % Al,
   0,003% bis 0,030 % Ti,
   höchstens 0,005 % O,
   0,0001% bis 0,20 %Nb,
   0% bis 0,008 % N,
   0% bis 1,00 % Cu,
   0% bis 1,00 % Ni,
   0% bis 1,00 % Mo,
   0% bis 1,00 % Cr,
   0% bis 0,10 % V,
   0% bis 0,005 % B,
   0% bis 0,050 % Zr,
   0% bis 0,050 % Ta,
   0% bis 0,010 % Mg,
   0% bis 0,005 % Ca,
   0% bis 0,005 % SEM,
   0% bis 0,005 % Y,
   0% bis 0,005 % Hf,
   0% bis 0,005 % Re,
   0% bis 0,005 % W sowie

   einen Fe und Verunreinigungen enthaltenden Rest,
   der durch Formel 1 festgelegte Ceq-Wert 0,30 bis 0,53 beträgt und der durch Formel 2 festgelegte Pcm-Wert 0,100 bis 0,165 beträgt,
   eine Mikrostruktur einer Oberflächenschicht, die eine Region von einer Oberfläche des Stahlblechs bis 1 mm Tiefe ist, polygonalen Ferrit in einem Flächenanteil von 0 % bis 50 % und einen Rest enthält, der Bainit, Nadelferrit und/oder angelassenen Martensit enthält,
   eine Mikrostruktur eines 1/4t-Abschnitts des Stahlblechs den polygonalen Ferrit in einem Flächenanteil von 10 % bis 40 % und einen Rest enthält, der den Bainit und/oder den Nadelferrit enthält,
   eine Mikrostruktur eines 1/2t-Abschnitts des Stahlblechs den polygonalen Ferrit in einem Flächenanteil von 5 % bis 30 % und einen Rest enthält, der den Bainit und/oder den Nadelferrit enthält,
   eine effektive Korngröße einer Dickendurchgangsfläche des Stahlblechs höchstens 20 $\mu$m beträgt,
   in der Dickendurchgangsfläche des Stahlblechs eine Härteverteilung in einer Blechdickenrichtung Formel 3 erfüllt und eine Differenz zwischen einer Härte der Oberflächenschicht und einer Härte des 1/2t-Abschnitts höchstens 30 Hv beträgt,

$$Ceq = [C] + [Mn]/6 + ([Ni] + [Cu])/15 + ([Cr] + [Mo] + [V])/5 \quad \dots \text{Formel 1,}$$

$$Pcm = [C] + [Si]/30 + ([Mn] + [Cu] + [Cr])/20 + [Ni]/60 + [Mo]/15 + [V]/10 + 5 \times [B]$$
$$\dots \text{Formel 2,}$$

$$\text{Härte der Oberflächenschicht} \geq \text{Härte des 1/4t-Abschnitts} \geq \text{Härte des 1/2t-Abschnitts}$$
$$\dots \text{Formel 3,}$$

wobei in Formel 1 und Formel 2 ein in Klammern gesetztes Elementsymbol eine Menge eines entsprechenden Elements in der chemischen Zusammensetzung des Stahlblechs in Masse-% angibt,
der Term "t" eine Blechdicke des Stahlrohrs ist,
der 1/4t-Abschnitt eine Region mit einer Dicke von 2 mm mit einer Position in einer Tiefe von 1/4 der Blechdicke t des Stahlblechs von der Oberfläche des Stahlblechs als Mittelebene ist,
der 1/2t-Abschnitt eine Region mit einer Dicke von 2 mm mit einer Position in einer Tiefe von 1/2 der Blechdicke t des Stahlblechs von der Oberfläche des Stahlblechs als Mittelebene ist,
die Mikrostruktur der Oberflächenschicht, die Mikrostruktur des 1/4t-Abschnitts und
die Mikrostruktur des 1/2t-Abschnitts durch das in der Beschreibung beschriebene Verfahren identifiziert sind,
die effektive Korngröße durch das in der Beschreibung beschriebene Verfahren identifiziert ist,
die Härteverteilung durch das in der Beschreibung beschriebene Verfahren identifiziert ist und
die Dickendurchgangsfläche ein Schnittteilstück parallel zur Längsrichtung des Stahlrohrs und senkrecht zur Oberfläche des Stahlblechs ist.

2. Stahlblech nach Anspruch 1,
   wobei die chemische Zusammensetzung des Stahlblechs in Masse-% 0,001 % bis 0,008 % N enthält.

3. Stahlblech nach Anspruch 1 oder 2,
   wobei die chemische Zusammensetzung des Stahlblechs in Masse-% einen oder mehrere Bestandteile enthält, die aus der Gruppe ausgewählt sind, die besteht aus:

   0,05 % bis 1,00 % Cu,
   0,05 % bis 1,00 % Ni,
   0,01 % bis 1,00 % Mo,
   0,01 % bis 1,00 % Cr,
   0,01 % bis 0,10 % V,
   0,0001 % bis 0,005 % B,
   0,0001 % bis 0,050 % Zr,
   0,0001 % bis 0,050 % Ta,
   0,0001 % bis 0,010 % Mg,
   0,0001 % bis 0,005 % Ca,
   0,0001 % bis 0,005 % SEM,
   0,0001 % bis 0,005 % Y,
   0,0001 % bis 0,005 % Hf,
   0,0001 % bis 0,005 % Re und
   0,0001 % bis 0,005 % W.

4. Stahlrohr nach einem der Ansprüche 1 bis 3,
   wobei die chemische Zusammensetzung des Stahlblechs in Masse-% höchstens 0,005 % Al enthält.

5. Stahlrohr nach einem der Ansprüche 1 bis 4,
   wobei die Mikrostruktur der Oberflächenschicht des Stahlblechs den angelassenen Martensit in einem Flächenanteil von mindestens 1 % enthält.

6. Stahlrohr nach einem der Ansprüche 1 bis 5,

wobei der Pcm-Wert 0,100 bis 0,140 beträgt.

**7.** Stahlrohr nach einem der Ansprüche 1 bis 6,

wobei das Stahlblech eine Blechdicke von mindestens 25,4 mm hat und
der Ceq-Wert 0,35 bis 0,53 beträgt.

**8.** Stahlblech, das das Stahlblech des Stahlrohrs nach einem der Ansprüche 1 bis 7 ist.

**Revendications**

**1.** Tuyau en acier comprenant :

une portion de matériau de base constituée d'une plaque en acier cylindrique ; et
une portion soudée qui est fournie sur une portion de couture de la plaque en acier et s'étend dans une direction longitudinale de la plaque en acier,
dans lequel une composition chimique de la plaque en acier contient, en % de masse unitaire,
C : 0,030 % à 0,100 %,
Si : 0,01 % à 0,50 %,
Mn : 0,50 % à 2,50 %,
P : 0,050 % ou inférieur,
S : 0,005 % ou inférieur,
Al : 0,040 % ou inférieur,
Ti : 0,003 % à 0,030 %,
O : 0,005 % ou inférieur,
Nb : 0,0001 % à 0,20 %,
N : 0 % à 0,008 %,
Cu : 0 % à 1,00 %,
Ni : 0 % à 1,00 %,
Mo : 0 % à 1,00 %,
Cr : 0 % à 1,00 %,
V : 0 % à 0,10 %,
B : 0 % à 0,005 %,
Zr : 0 % à 0,050 %,
Ta : 0 % à 0,050 %,
Mg : 0 % à 0,010 %,
Ca : 0 % à 0,005 %,
REM : 0 % à 0,005 %,
Y : 0 % à 0,005 %,
Hf : 0 % à 0,005 %,
Re : 0 % à 0,005 %,
W : 0 % à 0,005 %, et
un reste contenant Fe et des impuretés,
Ceq défini par la Formule 1 est de 0,30 à 0,53 et Pcm défini par la formule 2 est de 0,100 à 0,165,
une microstructure d'une couche de surface qui est une région à partir d'une surface de la plaque en acier jusqu'à une profondeur de 1 mm contient de la ferrite polygonale dans un rapport de surface de 0 % à 50 %, et un reste contenant un ou plusieurs de bainite, ferrite aciculaire, et martensite revenue,
une microstructure d'une portion de 1/4t de la plaque en acier contient la ferrite polygonale dans un rapport de surface de 10 % à 40 %, et un reste contenant un ou les deux de la bainite et la ferrite aciculaire,
une microstructure d'une portion de 1/2t de la plaque en acier contient la ferrite polygonale dans un rapport de surface de 5 % à 30 %, et un reste contenant un ou les deux de la bainite et la ferrite aciculaire,
une taille efficace de grain d'une surface d'épaisseur traversante de la plaque en acier est de 20 μm ou inférieure,
dans la surface d'épaisseur traversante de la plaque en acier, une distribution de dureté dans une direction d'épaisseur de plaque satisfait la formule 3, et une différence entre une dureté de la couche de surface et une dureté de la portion de 1/2t est de 30 Hv ou inférieure,

$$Ceq = [C] + [Mn] / 6 + ([Ni] + [Cu]) / 15 + ([Cr] + [Mo] + [V]) / 5$$
$$\text{... Formule 1}$$

$$Pcm = [C] + [Si] / 30 + ([Mn] + [Cu] + [Cr]) / 20 + [Ni] / 60 +$$
$$[Mo] / 15 + [V] / 10 + 5 \times [B] \text{... Formule 2}$$

$$\text{la dureté de la couche de surface} \geq \text{la dureté de la portion}$$
$$\text{de 1/4t} \geq \text{la dureté de la portion de 1/2t... Formule 3}$$

où, dans les Formule 1 et Formule 2, un symbole d'élément entre parenthèses indique une quantité d'un élément correspondant dans la composition chimique de la plaque en acier en % de masse unitaire,

le terme «t» est une épaisseur de plaque du tuyau en acier,

la portion de 1/4t est une région ayant une épaisseur de 2 mm avec une position à une profondeur de 1/4 de l'épaisseur de plaque t de la plaque en acier à partir de la surface de la plaque en acier comme un plan central,

la portion 1/2t est une région ayant une épaisseur de 2 mm avec une position à une profondeur de 1/2 de l'épaisseur de plaque t de la plaque en acier à partir de la surface de la plaque en acier comme un plan central,

la microstructure de la couche de surface, la microstructure de la portion de 1/4t, et la microstructure de la portion de 1/2t sont identifiées par le procédé décrit dans la description,

la taille effective de grain est identifiée par le procédé décrit dans la description,

la distribution de dureté est identifiée par le procédé décrit dans la description, et

la surface d'épaisseur traversante est une section de coupe parallèle à la direction longitudinale du tuyau en acier et perpendiculaire à la surface de la plaque en acier.

2. Tuyau en acier selon la revendication 1,

   dans lequel la composition chimique de la plaque en acier contient, en % de masse unitaire,
   N : 0,001 % à 0,008 %.

3. Tuyau en acier selon la revendication 1 ou 2,

   dans lequel la composition chimique de la plaque en acier contient un ou plusieurs choisis dans le groupe consistant en, en % de masse unitaire,
   Cu : 0,005 % à 1,00 %,
   Ni : 0,05 % à 1,00 %,
   Mo : 0,01 % à 1,00 %,
   Cr : 0,01 % à 1,00 %,
   V : 0,01 % à 0,10 %,
   B : 0,0001 % à 0,005 %,
   Zr : 0,0001 % à 0,050 %,
   Ta : 0,0001 % à 0,050 %,
   Mg : 0,0001 % à 0,010 %,
   Ca : 0,0001 % à 0,005 %,
   REM : 0,0001 % à 0,005 %,
   Y : 0,0001 % à 0,005 %,
   Hf : 0,0001 % à 0,005 %,
   Re : 0,0001 % à 0,005 %, et
   W : 0,0001 % à 0,005 %.

4. Tuyau en acier selon l'une quelconque des revendications 1 à 3,

   dans lequel la composition chimique de la plaque en acier contient, en % de masse unitaire,
   Al : 0,005 % ou inférieur.

5. Tuyau en acier selon l'une quelconque des revendications 1 à 4,
   dans lequel la microstructure de la couche de surface de la plaque en acier contient la martensite revenue dans un rapport de surface de 1 % ou supérieur.

6. Tuyau en acier selon l'une quelconque des revendications 1 à 5,
dans lequel le Pcm est de 0,100 à 0,140.

7. Tuyau en acier selon l'une quelconque des revendications 1 à 6,

dans lequel la plaque en acier présente une épaisseur de plaque de 25,4 mm ou supérieur, et
le Ceq est de 0,35 à 0,53.

8. Plaque en acier qui est la plaque en acier du tuyau en acier selon l'une quelconque des revendications 1 à 7.

# FIG. 2

# FIG. 3

# FIG. 4

# FIG. 5

FIG. 6

**REFERENCES CITED IN THE DESCRIPTION**

**Patent documents cited in the description**

- JP 2008013800 A
- JP 2008156754 A
- JP 2008163455 A
- JP 2008163456 A
- US 2015059912 A1